(19) Europäisches Patentamt
European Patent Office
Office européen des brevets

(11) **EP 4 414 415 A1**

(12) **EUROPEAN PATENT APPLICATION**
published in accordance with Art. 153(4) EPC

(43) Date of publication:
14.08.2024 Bulletin 2024/33

(21) Application number: 22878319.7

(22) Date of filing: 20.09.2022

(51) International Patent Classification (IPC):
*C08J 5/10* (2006.01)　　*C08K 3/04* (2006.01)
*C08K 3/40* (2006.01)　　*C08K 7/02* (2006.01)
*C08L 93/04* (2006.01)　　*C08L 101/00* (2006.01)
*C08L 101/02* (2006.01)　　*C08L 101/06* (2006.01)
*C08L 101/08* (2006.01)

(52) Cooperative Patent Classification (CPC):
C08J 5/10; C08K 3/04; C08K 3/40; C08K 7/02;
C08L 93/04; C08L 101/00; C08L 101/02;
C08L 101/06; C08L 101/08

(86) International application number:
PCT/JP2022/034992

(87) International publication number:
WO 2023/058448 (13.04.2023 Gazette 2023/15)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: 07.10.2021　JP 2021165563
07.10.2021　JP 2021165564

(71) Applicant: **Toray Industries, Inc.**
**Tokyo 103-8666 (JP)**

(72) Inventors:
• **HIRATA, Shin**
**Nagoya-shi, Aichi 455-8502 (JP)**
• **HAMAGUCHI, Mitsushige**
**Nagoya-shi, Aichi 455-8502 (JP)**

(74) Representative: **Mewburn Ellis LLP**
**Aurora Building**
**Counterslip**
**Bristol BS1 6BX (GB)**

(54) **FIBER-REINFORCED THERMOPLASTIC RESIN COMPOSITION**

(57) A fiber-reinforced thermoplastic resin composition comprising 5 to 50 parts by weight of reinforcing fibers (A) containing at least carbon fibers, 20 to 94.5 parts by weight of a thermoplastic resin (B), and 0.5 to 30 parts by weight of a rosin resin (C), wherein the rosin resin (C) has an acid value and/or hydroxyl value of 100 mgKOH/g or more. Since the fiber-reinforced thermoplastic resin composition of the present invention contains the reinforcing fibers containing at least carbon fibers and the specific rosin resin, a fiber-reinforced thermoplastic resin molded article high in reinforcing effect due to the reinforcing fibers and excellent in tensile strength, impact strength and appearance quality, particularly blackness, can be obtained.

# FIG. 1

EP 4 414 415 A1

**Description**

Technical Field of the Invention

The present invention relates to a fiber-reinforced thermoplastic resin composition comprising at least carbon fibers and a rosin resin.

Background Art of the Invention

Molded articles containing reinforcing fibers and a thermoplastic resin are lightweight and have excellent mechanical properties, so they are widely used in sporting goods, aerospace, and general industrial applications. For these reinforcing fibers, metal fibers such as aluminum fibers and stainless steel fibers, inorganic fibers such as silicon carbide fibers and carbon fibers, organic fibers such as aramid fibers and polyparaphenylene benzoxazole (PBO) fibers, and the like, are used, and from the viewpoint of a balance between specific strength, specific rigidity, and light weight, carbon fibers are suitable, and among them, polyacrylonitrile (PAN)-based carbon fibers are preferably used.

Reinforcing fibers have an excellent reinforcing effect when combined with a thermoplastic resin, but in order to make the effect even higher, reinforcing fibers need to be uniformly dispersed in the thermoplastic resin molded article. If reinforcing fibers remain in a non-uniform state, that is, in a fiber bundle state, a decrease in tensile strength and a decrease in impact strength may be seen, so when used as a structural member which requires strength, a sufficient reinforcing effect cannot be obtained, and there is a possibility that damage may occur during actual use. Further, if the fibers are unevenly dispersed, defects such as color unevenness may occur in the appearance of the molded article may occur. For these reasons, there is a requirement for a fiber-reinforced thermoplastic resin composition which has excellent tensile strength, impact strength, and appearance quality.

As means for improving the mechanical properties and appearance quality of a fiber-reinforced thermoplastic resin molded article, for example, there is a method of using reinforcing fibers and a terpene-based resin as the thermoplastic resin (for example, Patent document 1). Further, as means for enhancing the reinforcing effect of concrete members, a method for compounding reinforcing fibers into concrete or mortar has been proposed (for example, Patent document 2). Furthermore, as means for improving the adhesiveness of a thermoplastic resin, a modified polypropylene resin in which a rosin resin is added into a thermoplastic resin has been proposed (for example, Patent document 3). As means for improving the impact resistance of a fiber-reinforced thermoplastic resin molded article, for example, a method for using a terpene-based resin for a melt kneaded compound comprising reinforcing fibers, a thermoplastic resin, and a resin having a reactive functional group has been proposed (for example, Patent document 4). Furthermore, a method for enhancing an impact resistance by using organic fibers in addition to carbon fibers has been proposed (for example, Patent document 5). However, in molded articles obtained using these technologies, because of lack of fiber dispersibility of reinforcing fibers in the fiber-reinforced thermoplastic resin molded articles, there has been a problem that tensile strength, impact strength, and appearance quality, particularly blackness, are insufficient.

As described above, in the conventional technologies, it has not been possible to obtain a fiber-reinforced thermoplastic resin molded article with high tensile strength, impact properties, and good appearance quality using a thermoplastic resin as a matrix. Therefore, it has been desired to develop such a fiber-reinforced thermoplastic resin composition.

Prior art documents

Patent documents

Patent document 1: JP-A-10-138379
Patent document 2: JP-A-2011-162905
Patent document 3: JP-A-2016-74866
Patent document 4: WO 2010/107022
Patent document 5: WO 2014/098103

Summary of the Invention

Problems to be solved by the Invention

In view of the above-described problems of the prior art, an object of the present invention is to provide a fiber-reinforced thermoplastic resin composition capable of obtaining a fiber-reinforced thermoplastic resin molded article having excellent tensile strength, impact strength, and appearance quality, particularly blackness.

Means for solving the Problems

To solve the above-described problems, the present invention mainly has the following configuration.

(1) A fiber-reinforced thermoplastic resin composition comprising 5 to 50 parts by weight of reinforcing fibers (A) containing at least carbon fibers, 20 to 94.5 parts by weight of a thermoplastic resin (B), and 0.5 to 30 parts by weight of a rosin resin (C), wherein the rosin resin (C) has an acid value and/or hydroxyl value of 100 mgKOH/g or more.

(2) The fiber-reinforced thermoplastic resin composition according to (1), wherein the rosin resin (C) is contained at 1 to 100 parts by weight relative to 100 parts by weight of the reinforcing fibers (A).

(3) The fiber-reinforced thermoplastic resin composition according to (1) or (2), wherein the rosin resin (C) is modified.

(4) The fiber-reinforced thermoplastic resin composition according to any one of (1) to (3), wherein the rosin resin (C) contains at least one selected from the group consisting of hydrogenated rosin, polymerized rosin, acid modified rosin, rosin ester and rosin polyol.

(5) The fiber-reinforced thermoplastic resin composition according to any one of (1) to (4), wherein a thermal loss at 270°C of the rosin resin (C) is less than 5%.

(6) The fiber-reinforced thermoplastic resin composition according to any one of (1) to (5), wherein the reinforcing fibers (A) further contain at least one selected from the group consisting of organic fibers and glass fibers.

(7) The fiber-reinforced thermoplastic resin composition according to (6), wherein the organic fiber is at least one selected from the group consisting of polyamide fiber, polyester fiber, liquid crystal polyester fiber, polyarylene sulfide fiber and fluoro resin fiber.

(8) The fiber-reinforced thermoplastic resin composition according to any one of (1) to (7), wherein a weight average fiber length (Lw) of the reinforcing fibers (A) is in a range of 0.1 to 7.0 mm.

(9) The fiber-reinforced thermoplastic resin composition according to any one of (1) to (8), wherein the thermoplastic resin (B) contains at least one selected from the group consisting of polyamide resin, polyolefin resin, polycarbonate resin and polyphenylene sulfide resin.

(10) The fiber-reinforced thermoplastic resin composition according to any one of (1) to (9), wherein the thermoplastic resin (B) comprises at least two thermoplastic resins (Ba) and (Bb) different from each other.

(11) The fiber-reinforced thermoplastic resin composition according to (10), wherein the thermoplastic resin (Bb) comprises a thermoplastic resin having a reactive functional group, 20 to 94.5 parts by weight of a melt kneaded resin composition (B1) obtained by melt-kneading the thermoplastic resin (Ba) and the thermoplastic resin (Bb) is contained, the melt kneaded resin composition (B1) contains the thermoplastic resin (Ba) and a compound (Bc) produced by a reaction of the resin (Bb) having a reactive functional group, the resin (Ba) and the resin (Bb), and in the melt kneaded resin composition (B1), the resin (Bb) having a reactive functional group is dispersed in the thermoplastic resin (Ba) in a particle-like form with a number average particle diameter of 10 to 1,000 nm.

(12) The fiber-reinforced thermoplastic resin composition according to (11), wherein the thermoplastic resin (Ba) contained in the melt kneaded resin composition (B1) forms a continuous phase, the resin (Bb) having a reactive functional group forms a dispersed phase, and fine particles composed of the compound (Bc) having a particle diameter of 1 to 100 nm are contained in the dispersed phase.

(13) The fiber-reinforced thermoplastic resin composition according to (12), wherein an area ratio of the fine particles composed of the compound (Bc) in the dispersed phase formed by the resin (Bb) is 20% or more.

(14) The fiber-reinforced thermoplastic resin composition according to any one of (11) to (13), wherein the reactive functional group of the resin (Bb) is at least one selected from the group consisting of an amino group, a carboxyl group, a metal salt of a carboxyl group, an epoxy group, an acid anhydride group, and an oxazoline group.

(15) The fiber-reinforced thermoplastic resin composition according to any one of (10) to (14), wherein the thermoplastic resin (Ba) is a polyamide resin and the resin (Bb) is a polyolefin resin.

Effect according to the Invention

Since the fiber-reinforced thermoplastic resin composition of the present invention contains the reinforcing fibers containing at least carbon fibers and the rosin resin having an acid value and/or hydroxyl value of 100 mgKOH/g or more, it is possible to obtain a fiber-reinforced thermoplastic resin molded article high in reinforcing effect due to the reinforcing fibers and excellent in tensile strength, impact strength and appearance quality, particularly blackness of the molded article. The fiber-reinforced thermoplastic resin composition of the present invention is extremely useful for electrical/electronic equipment, OA equipment, home appliances, housings, sports parts, automobile parts, and the like.

Brief explanation of the drawings

[Fig. 1] Fig. 1 is a schematic configuration diagram showing an example of a cross-sectional form of a fiber bundle in the present invention.
[Fig. 2] Fig. 2 is a schematic configuration diagram showing an example of a preferable vertical sectional form of a molding material in the present invention.
[Fig. 3] Fig. 3 is a schematic configuration diagram showing an example of a preferred cross-sectional form of a molding material in the present invention.
[Fig. 4] Fig. 4 is a schematic configuration diagram showing another example of a preferred cross-sectional form of a molding material in the present invention.

Embodiments for carrying out the Invention

Hereinafter, the present invention will be explained in detail together with embodiments.

The fiber-reinforced thermoplastic resin composition (hereinafter, sometimes simply referred to as "composition") of the present invention comprises reinforcing fibers (A) containing at least carbon fibers, a thermoplastic resin (B), and a rosin resin (C) having an acid value and/or hydroxyl value of 100 mgKOH/g or more.

The reinforcing fibers (A) are preferably in the form of a continuous reinforcing fiber bundle as a starting material, and serve as a reinforcing material to impart high mechanical properties to the molded article. The thermoplastic resin (B) is a matrix resin having relatively high viscosity and high physical properties such as toughness and has the role of firmly holding reinforcing fibers (A) containing at least carbon fibers in the molded article. The rosin resin (C), which has an acid value and/or hydroxyl value of 100 mgKOH/g or more, allows reinforcing fibers (A) to be uniformly dispersed in the thermoplastic resin (B), giving it excellent tensile strength and impact strength, and further, giving it a good appearance quality.

As compared with the technology that improves strength and appearance quality by adding general compatibilizers or terpene resins, by containing the rosin resin (C) having an acid value and/or hydroxyl value of 100 mgKOH/g or more, the tensile strength, impact strength and appearance quality can be significantly improved.

In the molded article and composition of the present invention, the reinforcing fibers (A) are contained at an amount of 5 to 50 parts by weight relative to a total of 100 parts by weight of the reinforcing fibers (A), the thermoplastic resin (B), and the rosin resin (C) having an acid value and/or hydroxyl value of 100 mgKOH/g or more. If the content of the reinforcing fibers (A) is less than 5 parts by weight, the tensile strength and impact strength of the molded article decrease. The content of the reinforcing fibers (A) is preferably 10 parts by weight or more. Further, if the content of the reinforcing fibers (A) exceeds 50 parts by weight, the dispersibility of the reinforcing fibers (A) in the molded article decreases, often causing a decrease in the impact strength and appearance quality of the molded article. The content of the reinforcing fibers (A) is preferably 30 parts by weight or less.

The reinforcing fibers (A) contain at least carbon fibers. Further, although the kind of the other fibers contained in the reinforcing fibers (A) is not particularly restricted, glass fibers and organic fibers are suitable as fibers exhibiting a high reinforcing effect. It is also preferred to use two or more kinds of these reinforcing fibers in combination depending upon a reinforcing effect to be targeted. In such a case, the combination of reinforcing fibers is appropriately selected in accordance with properties to be desired.

As the kinds of carbon fibers, exemplified are PAN-based carbon fibers, pitch-based carbon fibers, cellulose-based carbon fibers, vapor-grown carbon fibers, and graphitized fibers thereof. PAN-based carbon fiber is a carbon fiber made from polyacrylonitrile fiber as the raw material. Pitch-based carbon fiber is a carbon fiber made from petroleum tar or petroleum pitch as the raw material. Cellulose-based carbon fiber is a carbon fiber made from viscose rayon, cellulose acetate, or the like as the raw material. Vapor-grown carbon fiber is a carbon fiber made from hydrocarbons or the like as the raw material. Among these, PAN-based carbon fibers are preferred because they have an excellent balance between strength and elastic modulus. Further, in order to further improve conductivity, carbon fiber coated with a metal such as nickel, copper, or ytterbium can also be used.

The surface oxygen ratio [O/C] of the carbon fiber is preferably 0.05 to 0.5. The surface oxygen ratio [O/C] is a ratio of the number of oxygen (O) and carbon (C) atoms on the fiber surface measured by X-ray photoelectron spectroscopy. When the surface oxygen ratio is 0.05 or more, a sufficient amount of functional groups can be ensured on the carbon fiber surface, and stronger adhesion can be obtained, thereby further improving the flexural strength and tensile strength. 0.08 or more is more preferable, and 0.1 or more is further preferable. Further, although there is no particular restriction to the upper limit of the surface oxygen ratio, it is generally preferably 0.5 or less in view of the balance between ease of handling and productivity of the carbon fibers. It is more preferably 0.4 or less, and further preferably 0.3 or less.

The surface oxygen ratio of carbon fiber is determined by X-ray photoelectron spectroscopy according to the following procedure. First, a carbon fiber bundle from which the sizing agent and the like attached to the carbon fiber surface is removed with a solvent is cut into 20 mm pieces, spread out and arranged on a copper sample support stand, then AlK$\alpha$1,2 is used as an X-ray source, and the inside of the sample chamber is maintained at $1 \times 10^{-8}$ Torr. The kinetic energy value (K.E.) of the main peak of C1s is adjusted to 1202 eV as a correction value for the peak due to charging during measurement. The C1s peak area is referred to as K. E., and it is determined by drawing a straight baseline in the range of 1191 to 1205 eV. The O1s peak area is referred to as K. E., and it is determined by drawing a straight baseline in the range of 947 to 959 eV.

Here, the surface oxygen ratio is calculated as an atomic number ratio from the ratio of the O1s peak area to the C1s peak area using a sensitivity correction value specific to the device. As the X-ray photoelectron spectrometer, model ES-200 supplied by Kokusai Electric Co., Ltd. is used, and the sensitivity correction value is set at 1.74.

Although means for controlling the surface oxygen ratio [O/C] to 0.05 to 0.5 is not particularly limited, for example, methods such as electrolytic oxidation, chemical oxidation and gas phase oxidation can be exemplified, and among them, electrolytic oxidation is preferred.

Although the average fiber diameter of the carbon fibers is not particularly limited, from the viewpoint of the mechanical properties and surface appearance of the molded article, it is preferably 1 to 20 $\mu$m, more preferably 3 to 15 $\mu$m. The number of single fibers in a bundle of reinforcing fibers is not particularly limited, but it is preferably 100 to 350,000, more preferably 20,000 to 100,000 from the viewpoint of productivity.

The carbon fibers may be surface-treated for the purpose of improving the adhesion between the carbon fibers and the thermoplastic resin (B) which is the matrix resin. As the method of the surface treatment, for example, exemplified are electrolytic treatment, ozone treatment, ultraviolet treatment, and the like.

The carbon fibers may be coated with a sizing agent for the purpose of preventing the carbon fibers from fuzzing or improving the adhesion between the carbon fibers and the thermoplastic resin (B) that is the matrix resin. As the sizing agent, concretely, exemplified are an epoxy resin, a phenol resin, a polyethylene glycol, a polyurethane, a polyester, an emulsifier, a surfactant, etc. Two or more kinds of these may be used. These sizing agents are contained on the surface of carbon fibers in the molding material. The sizing agent is preferably water-soluble or water-dispersible and is preferably an epoxy resin excellent in wettability with carbon fibers. In particular, a polyfunctional epoxy resin is more preferred.

As the polyfunctional epoxy resin, exemplified are bisphenol A-type epoxy resin, bisphenol F-type epoxy resin, aliphatic epoxy resin, phenol novolac epoxy resin, and the like. Among these, an aliphatic epoxy resin which easily exhibits adhesiveness with matrix resins is preferred. Since an aliphatic epoxy resin has a flexible skeleton, it tends to form a structure with a high toughness even if the crosslinking density is high. In case where it exists between the carbon fiber/matrix resin, because it becomes flexible and difficult to peel off, the strength of the molded article can be more improved. As the polyfunctional aliphatic epoxy resin, for example, as a diglycidyl ether compound, exemplified are an ethylene glycol diglycidyl ether and polyethylene glycol diglycidyl ethers, a propylene glycol diglycidyl ether and polypropylene glycol diglycidyl ethers, 1,4-butanediol diglycidyl ether, neopentyl glycol diglycidyl ether, polytetramethylene glycol diglycidyl ether, polyalkylene glycol diglycidyl ethers, and the like. Further, as a polyglycidyl ether compound, exemplified are glycerol polyglycidyl ether, diglycerol polyglycidyl ether, polyglycerol polyglycidyl ethers, sorbitol polyglycidyl ethers, arabitol polyglycidyl ethers, trimethylolpropane polyglycidyl ethers, trimethylolpropane glycidyl ethers, pentaerythritol polyglycidyl ethers, polyglycidyl ethers of aliphatic polyhydric alcohols, and the like.

Among the above-described aliphatic epoxy resins, aliphatic polyglycidyl ether compounds having a large number of highly reactive glycidyl groups are more preferred. The aliphatic polyglycidyl ether compound has a good balance of flexibility, crosslinking density, and compatibility with the matrix resin, and can further improve the adhesiveness. Among these, glycerol polyglycidyl ether, diglycerol polyglycidyl ether, polyethylene glycol glycidyl ethers, and polypropylene glycol glycidyl ethers are further preferred.

The amount of the sizing agent attached is preferably 0.01 part by weight or more and 10 parts by weight or less relative to 100 parts by weight of carbon fibers. If the amount of the sizing agent attached is 0.01 part by weight or more, the adhesiveness with the thermoplastic resin (B) is more improved. It is more preferably 0.05 part by weight or more, and further preferably 0.1 part by weight or more. On the other hand, if the amount of the sizing agent attached is 10 parts by weight or less, the physical properties of the thermoplastic resin (B) can be maintained at a higher level. It is more preferably 5 parts by weight or less, and further preferably 2 parts by weight or less.

Although means for applying the sizing agent is not particularly limited, for example, exemplified are a method of immersing the carbon fibers in the sizing solution via a roller, a method of bringing the carbon fibers into contact with a roller coated with the sizing solution, a method of spraying the sizing solution onto the carbon fibers in a form of mist, etc. Further, although either a batch type or a continuous type may be employed, a continuous type is preferred since it has good productivity and can reduce the variation. At this connection, it is preferred to control the concentration of the sizing solution, temperature, yarn tension, etc. so that the amount of the effective ingredient of the sizing agent is uniformly deposited on the carbon fibers within an appropriate range. Furthermore, it is more preferred to vibrate the carbon fibers with ultrasonic waves when applying the sizing agent.

The drying temperature and drying time should be adjusted depending on the amount of the compound attached, but from the viewpoint of completely removing the solvent used for applying the sizing agent, shortening the time required for drying, and on the other hand, preventing thermal deterioration of the sizing agent, thereby preventing the carbon fibers treated with the sizing agent from becoming hard and from deteriorating their spread ability, the drying temperature is preferably 150°C or more and 350°C or less, more preferably 180°C or more and 250°C or less.

As the solvent used to dilute the sizing agent, for example, exemplified are water, methanol, ethanol, dimethyl formamide, dimethyl acetamide, acetone, etc., but water is preferred from the viewpoint of ease of handling and disaster prevention. Therefore, when using a compound that is insoluble or hardly soluble in water as a sizing agent, it is preferred to add an emulsifier or a surfactant and disperse it in water. Concretely, as the emulsifier or the surfactant, styrene-maleic anhydride copolymers, olefin-maleic anhydride copolymers, formalin condensates of naphthalene sulfonates, anionic emulsifiers such as sodium polyacrylate, cationic emulsifiers such as polyethylene imine and polyvinyl imidazoline, nonionic emulsifiers such as nonylphenol ethylene oxide adducts, polyvinyl alcohol, polyoxyethylene ether ester copolymers, and sorbitan ester ethyl oxide adducts can be used, but a nonionic emulsifier small in interaction is preferable because it hardly inhibits the adhesion effect of the polyfunctional compound.

The composition of the present invention may contain organic fibers or glass fibers in addition to the aforementioned carbon fibers. Inorganic fibers such as carbon fibers are rigid and brittle, making them difficult to tangle and easily break. Therefore, there is a problem that fiber bundles made only of inorganic fibers tend to break easily during the production of a molded article or easily fall off from a molded article. Accordingly, by containing organic fibers which are flexible, hard to break, and tend to exist at a condition of curving in the molded article, the impact strength of the molded article can be greatly improved. In particular, in addition to the impact strength at room temperature, the impact strength under an environment of a low temperature can also be improved.

In the present invention, the content of organic fibers in the composition is preferably 1 to 45 parts by weight relative to 100 parts by weight of reinforcing fibers (A). In case where the content of the organic fibers is less than 1 part by weight, the impact strength of the molded article decreases. The content of the organic fibers is preferably 2 parts by weight or more, more preferably 3 parts by weight or more, and further preferably 4 parts by weight or more. On the other hand, in case where when the content of the organic fibers exceeds 45 parts by weight, the entanglement of the fibers increases, the dispersibility of the organic fibers in the molded article decreases, and it often cause that the tensile strength, impact strength, and appearance quality of the molded article decrease. The content of the organic fibers is preferably 30 parts by weight or less, more preferably 20 parts by weight or less, and further preferably 10 parts by weight or less.

The tensile elongation at break of the organic fiber used in the present invention is preferably 10 to 50%. When the tensile elongation at break of the organic fiber is 10% or more, the impact strength of the molded article can be further improved. More preferably it is 15% or more. On the other hand, when the tensile elongation at break of the organic fiber is 50% or less, the fiber strength and the rigidity of the molded article can be further improved. More preferably it is 40% or less.

The tensile elongation at break (%) of the organic fiber can be determined by the following method. A tensile test is conducted in a room under standard conditions (20°C, 65% RH) with a grip distance of 250 mm and a tensile speed of 300 mm/min, and the length when the fiber is cut is measured (however, if the fiber is cut near a chuck, it is excluded from the data as a breakage at chuck), it is calculated to second decimal place using the following equation, and rounded off at the second decimal place. The average value of the data n3 is determined and it is used as the tensile elongation at break in the present invention.

$$\text{Tensile elongation at break (\%)} = [(\text{length when being cut (mm)} - 250)/250] \times 100$$

The fineness of single fiber of the organic fibers is preferably 0.1-10 dtex.

The organic fiber can be appropriately selected within a range that does not significantly reduce the mechanical properties of the molded article. For example, fibers obtained by spinning resins such as polyolefin-based resins such as polyethylene and polypropylene, polyamide-based resins such as nylon 6, nylon 66, and aromatic polyamides, polyester-based resins such as polyethylene terephthalate and polybutylene terephthalate, fluoro-based resins such as polytetrafluoroethylene, perfluoroethylene/propene copolymers, and ethylene/tetrafluoroethylene copolymers, liquid crystal polymers such as liquid crystal polyesters and liquid crystal polyester amides, polyether ketones, polyether sulfones, polyarylene sulfides, polyacrylonitrile, and the like can be exemplified. Two or more kinds of these may be used. It is preferred to appropriately select the organic fibers to be used among these depending on the tensile elongation at break and the combination with the thermoplastic resin (B) as the matrix resin. In particular, it is preferred that the melting temperature of the organic fiber is 30°C to 150°C higher than the molding temperature (melting temperature) of the thermoplastic resin (B). Alternatively, an organic fiber made using a resin which is incompatible with the thermoplastic resin (B) is preferable because it exists in the molded article while maintaining its fibrous state, thereby further improving the impact strength of the molded article. As the organic fibers with a high melting temperature, exemplified are polyester fibers, liquid crystal polyester fibers, polyphenylene sulfide fibers, polyamide fibers, and PAN-based flame-resistant yarns which are not considered to melt.

The kind of glass fibers used in the present invention is not particularly restricted, and any known glass fibers can be used. Although the fiber diameter is not particularly limited, it is preferably 9-15 $\mu$m. As a concrete example of the glass fibers, T-120, T-187, and T-187H supplied by Nippon Electric Glass Co., Ltd. can be exemplified.

Generally, various binders are applied to glass fibers to improve the handling property by suppressing the generation of fluffs and static electricity during use, and to improve the adhesive property with the thermoplastic resin (B) which is the matrix. Also in the present invention, glass fibers to which these binders have been applied can be used. The kind of the binder may be selected depending upon the kind of the thermoplastic resin (B) which is the matrix. Further, the amount of the binder applied to the glass fibers is preferably 0.1 to 3.0% by mass as a solid content, based on the mass of the entire glass fibers after the binder has been applied. If the amount of the binder applied is 0.1% by mass or more, the above-described handling property and adhesive property can be sufficiently improved. On the other hand, if the amount of the binder applied is 3.0% by mass or less, the impregnation of the thermoplastic resin (B) into the glass fibers can be more effectively promoted.

As the binder, for example, exemplified are coupling agents represented by silane-based coupling agents such as amino silane, epoxy silane, and acrylic silane, polymers such as vinyl acetate resins, urethane resins, acrylic resins, polyester resins, polyether resins, phenoxy resins, polyamide resins, epoxy resins and polyolefin resins, or modified products thereof, ones containing oligomers such as waxes represented by polyolefin waxes, etc. Where, the above-described polymers and oligomers are generally used in the form of a water dispersion obtained by water dispersing using a surfactant, or an aqueous solution obtained by water solubilization by neutralization or hydration of carboxyl groups or amide groups present in the skeleton of the polymer or oligomer. In addition to the above-described components, the binder may contain inorganic salts such as lithium chloride and potassium iodide, antistatic agents represented by quaternary ammonium salts of ammonium chloride type and ammonium ethosulfate type, lubricants represented by aliphatic ester-based, aliphatic ether-based, aromatic ester-based, and aromatic ether-based surfactants, etc.

In the present invention, in case where glass fibers are contained in the composition, the content thereof is preferably 1 to 45 parts by weight relative to 100 parts by weight of the reinforcing fibers (A). If the content of the glass fibers is less than 1 part by weight, the impact strength of the molded article decreases. The content of the glass fibers is preferably 2 parts by weight or more, more preferably 3 parts by weight or more, and further preferably 4 parts by weight or more. On the other hand, if the content of the glass fibers exceeds 45 parts by weight, the entanglement of the fibers may increase, the dispersibility of the glass fibers in the molded article may decrease, and the tensile strength, impact strength and appearance quality of the molded article may often decrease. The content of the glass fibers is preferably 30 parts by weight or less, more preferably 20 parts by weight or less, and further preferably 10 parts by weight or less.

The composition of the present invention contains the thermoplastic resin (B) at a content of 20 to 94.5 parts by weight, relative to the total amount of 100 parts by weight of the reinforcing fibers (A), the thermoplastic resin (B) and the rosin resin (C) having an acid value and/or hydroxyl value of 100 mgKOH/g or more.

In the present invention, the thermoplastic resin (B) preferably has a molding temperature (melting temperature) of 200 to 450°C, and exemplified are polyolefin resins, polystyrene resins, polyamide resins, halogenated vinyl resins, polyacetal resins, saturated polyester resins, polycarbonate resins, resin, polyaryl sulfone resins, polyaryl ketone resins, polyphenylene ether resins, polyphenylene sulfide resins, polyaryl ether ketone resins, polyether sulfone resins, polyphenylene sulfide sulfone resins, polyarylate resins, polyamide resins, etc., and any of these corresponds to an electrical insulator. Two or more kinds of these can also be used.

Among the above-described thermoplastic resins (B), polyolefin resins, polyamide resins, polycarbonate resins, and polyarylene sulfide resins are more preferable because they are lightweight and excellent in balance of mechanical properties and moldability.

The polyolefin resins mentioned here include both unmodified and modified ones. For example, the unmodified polypropylene resin is concretely a propylene homopolymer or a copolymer of propylene and at least one of $\alpha$-olefin, conjugated diene, non-conjugated diene, or the like. As the $\alpha$-olefin, for example, exemplified are ethylene, 1-butene, 3-methyl-1-butene, 4-methyl-1-pentene, 3-methyl-1-pentene, 4-methyl-1-hexene, 4,4 dimethyl-1-hexene, $\alpha$-olefins having 2-12 carbon atoms other than propylene such as 1-nonene, 1-octene, 1-heptene, 1-hexene, 1-decene, 1-undecene, 1-dodecene, etc. As the conjugated diene and non-conjugated diene, for example, exemplified are butadiene, ethylidene norbornene, dicyclopentadiene, and 1,5-hexadiene, etc. Two or more kinds of these may be used. As the skeleton structure of the unmodified polypropylene resin, can be exemplified propylene homopolymer, a random or block copolymer of propylene and the other monomers described above, or a random or block copolymer of propylene and the other thermoplastic monomers, or the like. For example, polypropylene, ethylene/propylene copolymer, propylene/1-butene copolymer, and ethylene/propylene/1-butene copolymer can be exemplified as suitable examples. A homopolymer of propylene is preferred from the viewpoint of further improving the rigidity of the molded article, and a random or block copolymer of propylene and the other monomers described above is preferred from the viewpoint of further improving the impact strength of the molded article.

Further, as the modified polypropylene resin, an acid-modified polypropylene resin is preferable, and a polypropylene resin having a carboxylic acid and/or a salt group thereof bonded to a polymer chain is more preferable. The above-described acid-modified polypropylene resin can be prepared by various methods, for example, can be prepared by graft polymerizing a monomer having neutralized or non-neutralized carboxylic acid group and/or a monomer having a saponified or unsaponified carboxylic acid ester to the polypropylene resin.

Here, as the monomer having neutralized or non-neutralized carboxylic acid group or the monomer having a saponified or unsaponified carboxylic acid ester, for example, ethylene-based unsaturated carboxylic acids, their anhydrides, esterified products thereof, and the like can be exemplified. Furthermore, compounds having unsaturated vinyl groups other than olefins can also be exemplified.

As the ethylene-based unsaturated carboxylic acids, can be exemplified (meth)acrylic acid, maleic acid, fumaric acid, tetrahydro phthalic acid, itaconic acid, citraconic acid, crotonic acid, isocrotonic acid, and the like, and as the anhydrides thereof, can be exemplified nadic acid TM (endocys-bicyclo[2,2,1]hept-5-ene-2,3-dicarboxylic acid), maleic anhydride, citraconic anhydride, and the like.

As the esterified products of ethylene-based unsaturated carboxylic acids, can be exemplified (meth)acrylic acid esters such as methyl (meth)acrylate, ethyl (meth)acrylate, propyl (meth)acrylate, n-butyl (meth)acrylate, iso-butyl (meth)acrylate, tert-butyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, stearyl (meth)acrylate, tridecyl (meth)acrylate, lauroyl (meth)acrylate, cyclohexyl (meth)acrylate, benzyl (meth)acrylate, phenyl (meth)acrylate, isobornyl (meth)acrylate, dicyclopentanyl (meth)acrylate, dicyclopentenyl (meth)acrylate, dimethyl aminoethyl (meth)acrylate, and diethyl aminoethyl (meth)acrylate, hydroxyl group-containing (meth)acrylic acid esters such as hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate, and 2-hydroxy-3-phenoxypropyl acrylate, epoxy group-containing (meth)acrylic acid esters such as glycidyl (meth)acrylate, and methyl glycidyl (meth)acrylate, amino alkyl (meth)acrylates such as N,N-dimethyl aminoethyl (meth)acrylate, N,N-diethyl aminoethyl (meth)acrylate, N,N-dimethyl aminopropyl (meth)acrylate, N,N-dipropyl aminoethyl (meth)acrylate, N,N-dibutyl aminoethyl (meth)acrylate, N,N-dihydroxyethyl aminoethyl (meth)acrylate, etc.

As the monomers having unsaturated vinyl groups other than olefins, exemplified are isocyanate group-containing vinyls such as vinyl isocyanate and isopropenyl isocyanate, aromatic vinyls such as styrene, $\alpha$-methyl styrene, vinyl toluene, and t-butyl styrene. vinyls containing amide groups such as acrylamide, methacrylamide, N-methylol methacrylamide, N-methylol acrylamide, diacetone acrylamide, and maleic acid amide, vinyl esters such as vinyl acetate and vinyl propionate, unsaturated sulfonic acids such as styrene sulfonic acid, sodium styrene sulfonate, and 2-acrylamido-2-methylpropanesulfonic acid, and unsaturated phosphorus acids such as mono(2-methacryloyloxyethyl) acid phosphate and mono(2-acryloyloxyethyl) acid phosphate.

Two or more kinds of these can also be used. Further, among these, ethylene-based unsaturated carboxylic acid anhydrides are preferred, and maleic anhydride is more preferred.

Here, in order to improve the flexural strength and tensile strength of the molded article, it is preferred to use both unmodified polypropylene resin and modified polypropylene resin, and in particular, from the viewpoint of flame retardancy and balance of mechanical properties, it is preferred to use them so that the weight ratio of unmodified polypropylene resin to modified polypropylene resin becomes 95/5 to 75/25. It is more preferably 95/5 to 80/20, further preferably 90/10 to 80/20.

Further, polyamide resin is a resin whose main raw materials are amino acids, lactams, or diamines and dicarboxylic acids. As the typical examples of its main raw materials, exemplified are amino acids such as 6-aminocaproic acid, 11-aminoundecanoic acid, 12-aminododecanoic acid, and para-aminomethyl benzoic acid, lactams such as $\varepsilon$-caprolactam and $\omega$-laurolactam, aliphatic diamines such as tetramethylene diamine, hexamethylene diamine, 2-methylpentamethylene diamine, nonamethylene diamine, undecamethylene diamine, dodecamethylene diamine, 2,2,4-/2,4,4-trimethylhexamethylene diamine, and 5-methyl nonamethylene diamine, aromatic diamines such as meta xylylene diamine and para xylylene diamine, alicyclic diamines such as 1,3-bis(aminomethyl)cyclohexane, 1,4-bis(aminomethyl)cyclohexane, 1-amino-3-aminomethyl-3,5,5-trimethylcyclohexane, bis(4-aminocyclohexyl)methane, bis(3-methyl-4-aminocyclohexyl)methane, 2,2-bis(4-aminocyclohexyl)propane, bis(aminopropyl)piperazine, and aminoethyl piperazine, aliphatic dicarboxylic acids such as adipic acid, suberic acid, azelaic acid, sebacic acid, and dodecanedioic acid, aromatic dicarboxylic acids such as terephthalic acid, isophthalic acid, 2-chloroterephthalic acid, 2-methylterephthalic acid , 5-methylisophthalic acid, 5-sodium sulfoisophthalic acid, hexahydro terephthalic acid, and hexahydro isophthalic acid, alicyclic dicarboxylic acids such as 1,4-cyclohexane dicarboxylic acid, 1,3-cyclohexane dicarboxylic acid, and 1,2 cyclohexane dicarboxylic acid, etc. Two or more kinds of these may be used.

In the present invention, polyamide resins having a melting point of 200°C or higher are particularly useful because they are excellent in thermal resistance and strength. As concrete examples thereof, exemplified are polycaproamide (nylon 6), polyhexamethylene adipamide (nylon 66), polycaproamide/polyhexamethylene adipamide copolymer (nylon 6/66), polytetramethylene adipamide (nylon 46), polyhexamethylene sebamide (nylon 610), polyhexamethylene dodecamide (nylon 612), polydecamethylene decamide (nylon 1010), polydecamethylene dodecamide (nylon 1012), polydodecamethylene dodecamide (nylon 1212), polyundecaneamide (nylon 11), polydodecanamide (nylon 12), polyhexamethylene terephthalamide/polycaproamide copolymer (nylon 6T/6), polyhexamethylene adipamide/polyhexamethylene terephthalamide copolymer (nylon 66/6T), polyhexamethylene adipamide/polyhexamethylene isophthalamide copolymer (nylon 66/6I), polyhexamethylene adipamide/polyhexamethylene terephthalamide/polyhexamethylene isophthalamide copolymer ( nylon 66/6T/6I), polyhexamethylene terephthalamide/polyhexamethylene isophthalamide copolymer (nylon 6T/6I), polyhexamethylene terephthalamide/polydodecanamide copolymer (nylon 6T/12), polyhexamethylene terephthalamide/poly(2-methylpentamethylene) terephthalamide copolymer (nylon 6T/M5T), polyxylylene adipamide (nylon XD6), polynonamethylene terephthalamide (nylon 9T), copolymers thereof, etc. Two or more kinds of these may be used. Among these, nylon 6, nylon 66, nylon 610, nylon 11, nylon 12 and nylon 9T are more preferred.

There is no particular restriction on the degree of polymerization of these polyamide resins, and it is preferred that the relative viscosity of a solution prepared by dissolving 0.25 g of a polyamide resin in 25 ml of 98% concentrated sulfuric acid, determined at 25°C, is in the range of 1.5 to 5.0, in particular, a polyamide resin with a relative viscosity in the range of 2.0 to 3.5 is more preferred.

Further, a polycarbonate resin is prepared by reacting dihydric phenol and a carbonate precursor. It may also be a copolymer prepared using two or more kinds of dihydric phenols or two or more kinds of carbonate precursors. As examples of the reaction methods, can be exemplified interfacial polymerization, melt transesterification, solid phase transesterification of carbonate prepolymers, and ring-opening polymerization of cyclic carbonate compounds. Such polycarbonate resins themselves are known, and for example, polycarbonate resins described in JP-A-2002-129027 can be used.

As the dihydric phenols, for example, exemplified are 1,1-bis(4-hydroxyphenyl)-3,3,5-trimethyl cyclohexane, bis(4-hydroxyphenyl)alkane (such as bisphenol A), 2,2-bis{(4-hydroxy-3-methyl)phenyl}propane, α,α'-bis(4-hydroxyphenyl)-m-diisopropyl benzene, 9,9-bis(4-hydroxy-3-methylphenyl)fluorene, etc. Two or more kinds of these may be used. Among these, bisphenol A is preferred, and a polycarbonate resin more excellent in impact resistance can be obtained. On the other hand, copolymers prepared using bisphenol A and other dihydric phenols are excellent in high heat resistance or low water absorption.

As the carbonate precursor, for example, carbonyl halide, carbonic diester, or haloformate is used, and concretely, phosgene, diphenyl carbonate, dihaloformate of dihydric phenol, or the like, can be exemplified.

When producing a polycarbonate resin from the above-described dihydric phenol and carbonate precursor, a catalyst, a terminal stopper, an antioxidant which prevents oxidation of the dihydric phenol, and the like, may be used as needed.

Further, the polycarbonate resins in the present invention include a branched polycarbonate resin copolymerized with a trifunctional or higher polyfunctional aromatic compound, a polyester carbonate resin copolymerized with an aromatic or aliphatic (including alicyclic) difunctional carboxylic acid, a copolymerized polycarbonate resin copolymerized with a difunctional alcohol (including alicyclic groups), and a polyester carbonate resin copolymerized with such difunctional carboxylic acid and difunctional alcohol. These polycarbonate resins are also known. Moreover, two or more kinds of these polycarbonate resins may be used.

Although the molecular weight of the polycarbonate resin is not specified, it is preferably one with a viscosity average molecular weight of 10,000 to 50,000. If the viscosity average molecular weight is 10,000 or more, the strength of the molded article can be more improved. It is more preferably 15,000 or more, and further preferably 18,000 or more. On the other hand, if the viscosity average molecular weight is 50,000 or less, the molding processability is improved. It is more preferably 40,000 or less, and further preferably 30,000 or less. When using two or more kinds of polycarbonate resins, it is preferred that the viscosity average molecular weight of at least one kind is within the above-described range. In this case, it is preferred to use a polycarbonate resin having a viscosity average molecular weight of more than 50,000, preferably more than 80,000, as the other polycarbonate resin. Such a polycarbonate resin has a high entropy elasticity, which is advantageous when used in conjunction with gas-assisted molding etc., and in addition, properties derived from the high entropy elasticity (improved melting properties such as anti-drip property, drawdown property and improved jetting) are exhibited.

The viscosity average molecular weight (M) of the polycarbonate resin is determined by inserting the specific viscosity (ηsp) determined at 20°C from a solution which is prepared by dissolving 0.7g of polycarbonate resin in 100 ml of methylene chloride, into the following equation.

$$\eta sp/c = [\eta] + 0.45 \times [\eta]2c$$

(where, [η] is the limiting viscosity)

$$[\eta]=1.23\times10^{-4}M^{0.83}$$

$$c=0.7$$

In the present invention, as the polyarylene sulfide resin, for example, exemplified are polyphenylene sulfide (PPS) resin, polyphenylene sulfide sulfone resin, polyphenylene sulfide ketone resin, random or block copolymers thereof, and the like. Two or more kinds of these may be used. Among them, polyphenylene sulfide resin is particularly preferably used.

Polyarylene sulfide resins can be produced by an arbitrary method, for example, such as a method described in JP-B-45-3368 for obtaining a polymer with a relatively small molecular weight, and a method described in JP-B-52-12240 and JP-A-61-7332 for obtaining a polymer with a relatively large molecular weight.

The obtained polyarylene sulfide resin may be served to various treatments such as crosslinking/polymerizing by heating in air, heat treatment in an inert gas atmosphere such as nitrogen or under reduced pressure, washing with an organic solvent, hot water, acid aqueous solution, etc., and activation with functional group-containing compounds such as acid anhydrides, amines, isocyanates, or functional group-containing disulfide compounds.

The melt viscosity of the polyarylene sulfide resin is preferably 80 Pa·s or less, more preferably 20 Pa s or less under the conditions of 310°C and a shear rate of 1,000/sec. There is no particular restriction on the lower limit, but it is preferably 5 Pa·s or more. Two or more kinds of polyarylene sulfide resins having different melt viscosities may be used in combination. Where, the melt viscosity can be measured using a capillograph (supplied by Toyo Seiki Co., Ltd.) under conditions of a die length of 10 mm and a die hole diameter of 0.5-1.0 mm.

As the polyarylene sulfide resin, a polyphenylene sulfide resin, which is commercially available as "Torelina" (registered trademark) supplied by Toray Industries, Inc., "DIC.PPS" (registered trademark) supplied by DIC Corporation, or "Durafide" (registered trademark) supplied by Polyplastics Corporation, can also be used.

In the thermoplastic resin composition of the present invention, the thermoplastic resin (B) is preferably composed of at least two different thermoplastic resins (Ba) and (Bb).

It is preferred that the thermoplastic resin (B) contains (Ba) and (Bb) because the tensile strength and impact strength of the molded article are increased. Further, there are no particular restrictions on the kinds of the thermoplastic resins (Ba) and (Bb) contained in the thermoplastic resin (B), but as the thermoplastic resin (Ba), the thermoplastic resin excellent in mechanical strength as described later is preferably used, and as the thermoplastic resin (Bb), it is preferred to use the kind of the thermoplastic resin described later as a thermoplastic resin excellent particularly in impact strength. It is also preferred to use two or more kinds of these thermoplastic resins in combination depending upon the targeted effect. In that case, the combination of thermoplastic resins is appropriately selected in accordance with the properties to be desired.

Further, the thermoplastic resin (B) in the composition of the present invention may be melt kneaded resin compositions (B 1), the melt kneaded resin composition (B 1) comprises the thermoplastic resin (Ba), the resin (Bb) having a reactive functional group and a compound (Bc) produced by a reaction between (Ba) and (Bb), and the melt kneaded resin compositions (B1) obtained by kneading the thermoplastic resin (Ba) and the resin (Bb) having a reactive functional group is contained at 20- 94.5 parts by weight relative to the total of 100 parts by weight of the reinforcing fibers (A), the melt kneaded resin composition (B 1) and the rosin resin (C).

<Thermoplastic resin (Ba)>

In the present invention, the thermoplastic resin (Ba) preferably has a molding temperature (melting temperature) of 200-450°C, and exemplified are polyolefin resins, polystyrene resins, polyamide resins, halogenated vinyl resins, polyacetal resins, saturated polyester resins, polycarbonate resins, polyaryl sulfone resins, polyaryl ketone resins, polyphenylene ether resins, polyphenylene sulfide resins, polyaryl etherketone resins, polyether sulfone resins, polyphenylene sulfide sulfone resins, polyarylate resins, polyamide resins, etc., and any of these corresponds to an electrical insulator. Two or more kinds of these can also be used. Among these, polyolefin resins, polyamide resins, polycarbonate resins, and polyphenylene sulfide resins are preferred from the viewpoint of molding processability, mechanical properties and light weight.

<Resin having a reactive functional group (Bb)>

The base resin for the resin (Bb) having a reactive functional group is not particularly restricted, but it is selected from, for example, polyamide, polyester, polyphenylene sulfide, polyphenylene oxide, polycarbonate, polylactic acid, polyacetal, polysulfone, tetrafluoride polyethylene, polyetherimide, polyamideimide, polyimide, polyethersulfone, polyetherketone, polythioetherketone, polyetheretherketone, polyethylene, polypropylene, styrene-based resins such as polystyrene and ABS, rubbery polymers, polyalkylene oxides, etc., and at least one resin different from the aforementioned polyamide resin (Ba) can be used. Among these, as the base resin for the resin (Bb), resins selected from polyolefin resins such as polyethylene resins and polypropylene resins, styrene-based resins, and rubbery polymers are more preferable because of ease of introducing reactive functional groups, and further, from the viewpoint of imparting impact absorption properties, rubbery polymers are further preferable.

The rubbery polymer is a polymer which contains a polymer with a low glass transition temperature, and in which part of the molecules are restrained by covalent bonds, ionic bonds, Van der Waals forces, entanglements, etc. The glass transition temperature of the rubbery polymer is preferably 25°C or lower. If the glass transition temperature exceeds 25°C, the impact resistance becomes poor, which is not preferred.

As the rubbery polymers, for example, polybutadiene, polyisoprene, styrene-butadiene random copolymers and block copolymers, hydrogenated products of the block copolymers, acrylonitrile-butadiene copolymers, diene-based rubbers such as butadiene-isoprene copolymers, ethylene-propylene random copolymers and block copolymers, ethylene-butene random copolymers and block copolymers, copolymers of ethylene and $\alpha$-olefin, ethylene-acrylic acid copolymers, ethylene-unsaturated carboxylic acid copolymers such as ethylene-methacrylic acid copolymers, ethylene-unsaturated carboxylic ester copolymers such as ethylene-acrylic esters and ethylene-methacrylic esters, ethylene-unsaturated carboxylic acid-unsaturated carboxylic acid metal salt copolymers such as ethylene-acrylic acid-acrylic acid metal salts and ethylene-methacrylic acid-methacrylic acid metal salts, in which a part of unsaturated carboxylic acid is a metal salt, acrylic ester-butadiene copolymers such as acrylic-based elastic polymers such as butyl acrylate-butadiene copolymers, copolymers of ethylene and vinyl fatty acids such as ethylene-vinyl acetate, ethylene-propylene-non-conjugated diene terpolymers such as ethylene-propylene-ethylidene norbornene copolymers and ethylene-propylene-hexadiene copolymers, butylene-isoprene copolymers, chlorinated polyethylenes, thermoplastic elastomers such as polyamide elastomers and polyester elastomers, and the like, can be exemplified as preferable examples.

When used for the thermoplastic resin (Ba), from the viewpoint of obtaining an excellent impact strength, ethylene-unsaturated carboxylic acid ester copolymers, ethylene-propylene random copolymers and block copolymers, ethylene-butene random copolymers and block copolymers, and copolymers of ethylene and $\alpha$-olefin are preferably used.

As the unsaturated carboxylic ester in the ethylene-unsaturated carboxylic ester copolymer, (meth)acrylic ester is preferred. As concrete examples of the unsaturated carboxylic acid esters, (meth)acrylic acids such as methyl (meth)acrylate, ethyl (meth)acrylate, 2-ethylhexyl (meth)acrylate, and stearyl (meth)acrylate can be exemplified. Here, "(meth)acrylic acid" means "acrylic acid or methacrylic acid". The weight ratio of the ethylene component to the unsaturated carboxylic acid ester component in the copolymer is not particularly limited, but is preferably in the range of 90/10 to 10/90, more preferably 85/15 to 15/85. The number average molecular weight of the ethylene-unsaturated carboxylic acid ester copolymer is not particularly limited, but is preferably in the range of 1,000 to 70,000 from the viewpoint of flowability and mechanical properties.

The reactive functional group contained in the resin (Bb) having a reactive functional group is not particularly limited as long as it reacts with a functional group present in the thermoplastic resin (Ba), but preferably exemplified is at least one selected from the group of amino groups, carboxyl groups, metal salts of carboxyl groups, hydroxyl groups, epoxy groups, acid anhydride groups, isocyanate groups, mercapto groups, oxazoline groups, sulfonic acid groups, and the like. Among these, groups selected from amino groups, carboxyl groups, metal salts of carboxyl groups, epoxy groups, acid anhydride groups, and oxazoline groups are more preferably used because they have high reactivity and cause fewer side reactions such as decomposition and crosslinking.

In case where an acid anhydride group is introduced into a rubbery polymer, it can be carried out by a known technology, and although there are no particular restrictions, for example, a method of copolymerizing an acid anhydride such as maleic anhydride, itaconic anhydride, endic anhydride, citraconic anhydride and 1-butene-3,4-dicarboxylic acid anhydride with a monomer which is a raw material for the rubbery polymer, a method of grafting the acid anhydride onto the rubbery polymer, or the like, can be used.

Further, in case where an epoxy group is introduced into a rubbery polymer, it can be carried out by a known technology, and although there are no particular restrictions, for example, a method of copolymerizing a vinyl-based monomer having an epoxy group such as glycidyl acrylate, glycidyl methacrylate, glycidyl ester compound of an $\alpha,\beta$-unsaturated acid such as ethacrylic acid glycidyl and itaconic acid glycidyl, with a monomer which is a raw material for the rubbery polymer, a method of polymerizing a rubbery polymer using a polymerization initiator or a chain transfer agent which has an epoxy group, a method of grafting an epoxy compound onto the rubbery polymer, or the like, can be used.

Furthermore, in case where an oxazoline group is introduced into a rubbery polymer, it can be carried out by a known technology, and although there are no particular restrictions, for example, a method of copolymerizing a vinyl-based monomer having an oxazoline group such as 2-isopropenyl-oxazoline, 2-vinyl-oxazoline, 2-acroyl-oxazoline or 2-styryl-oxazoline with a monomer which is a raw material for the rubbery polymer, or the like, can be used.

Although the number of functional groups per one molecular chain in the resin (Bb) having reactive functional groups is not particularly restricted, it is usually preferably 1 to 10, and 1 to 5 is preferred in order to reduce side reactions such as crosslinking.

The melt kneaded resin composition (B1) in the present invention comprises a thermoplastic resin (Ba), a resin (Bb) having a reactive functional group, and a compound (Bc) produced by a reaction between (Ba) and (Bb). The above-described melt kneaded resin compositions (B1) can be obtained by melt-kneading the thermoplastic resin (Ba) and the resin (Bb) having a reactive functional group. Further, since the resin (Bb) has a reactive functional group, (Bc) is produced by the reaction of (Ba) and (Bb) during the melt-kneading of the resins (Ba) and (Bb). The melt kneaded resin composition (B1) is obtained as a thermoplastic resin composition in which the thermoplastic resin (Ba) forms a matrix phase as a continuous layer and the resin (Bb) is dispersed in a particle form as a dispersed phase. The structure of particles made of the resin (Bb) is highly controlled, which greatly contributes to improve the impact resistance. The number average particle diameter of the particles made of the resin (Bb), contained in the melt kneaded resin composition (B 1) as a thermoplastic resin composition in which the thermoplastic resin (Ba) and the resin (Bb) are mixed to form a matrix resin, and the resin (Bb) is dispersed in the matrix resin in the form of particles, must be 10-1,000 nm. If the number average particle diameter of the particles is less than 10 nm, the impact resistance, which is a feature of the present invention, is not exhibited, and if it exceeds 1,000 nm, the rigidity, which is a feature of the present invention, decreases, which is not desirable. By achieving improvement of the impact resistance with a small amount of particles made of resin (Bb) which are highly controlled in structure, a fiber-reinforced thermoplastic resin composition molded article excellent in balance of rigidity and impact resistance can be obtained.

Further, the fiber-reinforced thermoplastic resin composition molded article in the present invention preferably contains fine particles of the compound (Bc), which are produced by the reaction between the thermoplastic resin (Ba) and the resin (Bb) and have an average particle diameter of 1 to 100 nm, in the particles made of the resin (Bb). Furthermore, it is preferred that the area ratio occupied by the compound (Bc) produced by the reaction of the components (Ba) and (Bb) in the particles made of the resin (Bb) is 20% or more. Even if the amount of the resin (Bb) which forms the dispersed phase is small, by controlling the structure within the dispersed phase as described above, a fiber-reinforced thermoplastic resin composition molded article excellent in balance of rigidity and impact resistance can be obtained.

Where, known technologies can be applied to the morphology observation method. For example, a method is exemplified for cutting the center part of the cross-sectional direction of a test piece into a 1 to 2 mm square, dying the resin (B2) having a reactive functional group with ruthenium tetroxide, then preparing a ultrathin piece having a thickness of 0.1 $\mu$m or less (approximately 80 nm) using an ultramicrotome, and observing a resin part comprising the thermoplastic resin (Ba), the resin (Bb) and the compound (Bc) (excluding reinforcing fibers) using a transmission electron microscope. The number average particle diameter (Xn) of the particles is determined by randomly extracting 400 or more particles from the obtained image, analyzing the particle diameter distribution using an image analysis software "Scion Image" supplied by Scion Corporation, and calculating using the following equation.

$$\text{Number average particle diameter (Xn)} = \Sigma(Xi \times ni)/\Sigma ni$$

Xi; particle diameter
ni: Number of particles corresponding to particle diameter (Xi)
(i=1, 2, 3, ···, n)

The number average particle diameter of the particles made of the resin (Bb) can be determined from an image magnified 10,000 times. Further, the number average particle diameter of the compound (Bc) produced by the reaction of the thermoplastic resin (Ba) and (Bb) contained in the particles comprising (Bb) can be determined from an image magnified 35,000 times.

The area ratio occupied by the compound (Bc) in the particles comprising the resin (Bb) is determined using a transmission electron microscope from an image magnified 35,000 times using the image analysis software "Scion Image" supplied by Scion Corporation, by analyzing each of the area of the resin (Bb) and the area occupied by the compound (Bc) and calculating from the following equation.

$$Sn = Sp/(Sa2 + Sp)$$

Sn: area ratio (Sn) occupied by the compound (Bc) in particles comprising resin (Bb)
Sa2: area occupied by resin (Bb)
Sp: area occupied by compound (Bc)

In the present invention, the method for producing the melt-kneaded resin composition (B 1) is not particularly restricted, but for example, the following method is effective.

As one of the methods for producing the melt-kneaded resin composition (B 1), a method is exemplified for putting the thermoplastic resin (Ba) and the resin having a reactive functional group (Bb) into a twin screw extruder with a ratio L/DO of a screw length L and a screw diameter D0 of 50 or more and having multiple full flight zones and kneading zones, and when referring the maximum resin pressure among the resin pressures in the kneading zones in the screw to Pkmax (MPa) and referring the minimum resin pressure among the resin pressures in the full flight zones in the screw to Pfmin (MPa), melt-kneading under a condition satisfying Pkmax $\geqq$ Pfmin+0.3.

From the viewpoint of improving kneading property and reactivity, the value of L/DO is more preferably 60 to 200, and further preferably in a range of 80 to 200. Further, in case of using a twin-screw extruder with L/D0 of less than 50, it is preferred to knead the resin composition several times so that the L/D0 value calculated with respect to places through which the resin composition passes becomes 50 or more. The L/D0 is a value calculated by dividing the screw length L by the screw diameter D0. Here, the screw length refers to a length of the screw from an upstream end of the screw segment at a position (feed port) where the thermoplastic resin (Ba) and the resin having a reactive functional group (Bb) are supplied at a root of the screw up to a screw tip. The screw of a twin-screw extruder is constructed by combining screw segments with different lengths and shape characteristics such as full flight and kneading disk. Further, in an extruder, the side where raw materials are supplied is sometimes referred to as upstream side, and the side where molten resin is discharged is sometimes referred to as downstream side.

In case of producing the melt-kneaded resin composition (B 1) using a twin-screw extruder with L/DO of 50 or more, the screw of the twin-screw extruder preferably has a full flight zone and a kneading zone at a plurality of locations, from the viewpoint of kneading property and reactivity. The full flight zone consists of one or more full flights, and the kneading zone consists of one or more kneading disks.

When the maximum resin pressure in the kneading zone, among the resin pressures indicated by the resin pressure gauges installed at multiple locations in the kneading zone, is referred to as Pkmax (MPa), and the minimum resin pressure in the full flight zone, among the resin pressures indicated by the resin pressure gauges installed at multiple locations in the full flight zone, is referred to as Pfmin (MPa), production is performed preferably at a condition where the value of Pkmax is (Pfmin + 0.3) or more, and more preferably at a condition where the value of Pkmax is (Pfmin + 0.5) or more.

The kneading zone composed of one or more kneading disks is more excellent in kneading property and reactivity for molten resin than the full flight zone composed of one or more full flights. By filling the kneading zone with molten resin, kneading property and reactivity are dramatically improved. One index indicating the state of filling with molten resin is the value of resin pressure, and the higher the resin pressure is, the more filling the molten resin is. Namely, when using a twin-screw extruder, the reaction can be effectively promoted by increasing the resin pressure in the kneading zone to a certain range at a condition higher than the resin pressure in the full flight zone.

There are no particular restrictions as a method for increasing the resin pressure in the kneading zone, but methods for introducing a reverse screw zone having an effect of pushing the molten resin back to the upstream side or a seal ring zone having an effect of accumulating the molten resin between the kneading zones or at a location downstream of the kneading zone, and the like, can be preferably used. The reverse screw zone and the seal ring zone consist of one or more reverse screws and one or more seal rings, and it is also possible to combine them.

For example, in case of introducing a reverse screw zone between the kneading zones or on the downstream side of the kneading zone, when the length of the reverse screw zone is referred to as Lr, it is preferred that the reverse screw zone has a length satisfying Lr/D0=0.1 to 10 from the viewpoint of kneading property and reactivity. The value Lr/D0 with respect to the length of the reverse screw zone is more preferably 0.2 to 8, and further preferably 0.3 to 6. In case where a plurality of reverse screw zones are provided, it is preferred that all of the respective reverse screw zones satisfy the above-described range of Lr/D0. Where, the length Lr of the reverse screw zone is determined as a distance between the perpendicular line from the upstream end of the most upstream reverse screw constituting the reverse screw zone to the center line of the screw shaft, and the perpendicular line from the downstream end of the most downstream reverse screw constituting the reverse screw zone.

In case of producing the melt-kneaded resin composition (B1) using a twin-screw extruder with L/DO of 50 or more, the extrusion rate is preferably 0.01 kg/h or more per screw 1 rpm, more preferably 0.05 kg/h to 1 kg/h, further preferably 0.08 to 0.5 kg/h, and most preferably 0.1 to 0.3 kg/h. Here, the extrusion rate refers to the weight (kg) of melt kneaded substances discharged from the extruder per one hour.

Where, the preferable numerical range regarding the extrusion rate in the twin-screw extruder is based on the extrusion rate of a twin-screw extruder with a screw diameter of 41 mm. If the screw diameters differ significantly, for example, when using a twin-screw extruder with a diameter of less than 30 mm or more than 50 mm, the extrusion rate can be interpreted as one decreasing or increasing according to preferably 2.5 power law or 3 power law, more preferably according to the 2.5 power law.

For example, in case of using a twin-screw extruder with a screw diameter of 20 mm, when assuming that the extrusion rate follows 2.5 power law of the screw diameter ratio before and after scaling down, the extrusion rate of the melt kneaded substances is preferably 0.0017 kg/h or more per screw rotational speed 1 rpm, more preferably 0.0083 to 0.17 kg/h, further preferably 0.013 to 0.083 kg/h, and most preferably 0.017 to 0.050 kg/h.

Further, in case of using a twin-screw extruder with a screw diameter of 100 mm, when assuming that the extrusion rate follows the 2.5 power law of the ratio of screw diameters before and after scale-up, the extrusion rate of the melt kneaded substances is preferably 0.093 kg/h or more per 1 rpm of the screw, more preferably 0.46 to 9.29 kg/h, further preferably 0.74 to 4.65 kg/h, and most preferably 0.93 to 2.79 kg/h.

Furthermore, although the rotational speed of the screw is not particularly restricted, it is preferably 10 rpm or more, more preferably 15 rpm or more, and further preferably 20 rpm or more.

The residence time in the twin-screw extruder is preferably 1-30 minutes, more preferably 1.5 to 25 minutes. Such a residence time is a value representing the average residence time from when the raw material is supplied to the twin-screw extruder until it is discharged. The residence time is defined as the time from the timing when about 1g of a coloring agent together with the raw material is charged from a position of the base of the screw where the raw material is supplied under a steady state of melt kneading of uncolored melt kneaded substances adjusted to a predetermined extrusion rate, until the timing when the mixture is extruded from the discharge port of the extruder and the degree of coloring of the extrudate by the coloring agent reaches its maximum.

When producing the melt-kneaded resin composition (B 1) using a twin-screw extruder with L/DO of 50 or more, there are no particular restrictions on the screw of the twin-screw extruder, and any of screws of fully meshed type, incompletely meshed type, non-meshed type and the like can be used. From the viewpoint of kneading property and reactivity, the fully meshed-type screw is preferred. Further, although the screws may be rotated in the same direction or in different directions, rotation in the same direction is preferred from the viewpoint of kneading property and reactivity. The same-direction rotation fully meshed-type screws are most preferred.

As the screw configuration of the twin-screw extruder, a combination of full flights and/or kneading disks is used, but a screw configuration that effectively applies a shear field to the resin composition in a molten state is preferred. Therefore, as described above, it is preferred that the screw of the twin-screw extruder has a plurality of kneading zones each consisting of one or more kneading disks in the longitudinal direction. The total length of these kneading zones preferably ranges from 5 to 50%, more preferably from 10 to 40%, further preferably from 15 to 30% of the total length of the screw.

When the length of each kneading zone in the screw of a twin-screw extruder is referred to as Lk, it is preferred that all kneading zones have a length of Lk/D0=0.2-10, from the viewpoint of kneading property and reactivity. The length Lk/D0 of each kneading zone is more preferably from 0.3 to 9, and further preferably from 0.5 to 8. The length Lk of the kneading zone is defined as a distance between the perpendicular line from the upstream end of the most upstream kneading disk constituting the kneading zone to the center line of the screw shaft, and the perpendicular line from the downstream end of the most downstream kneading disk constituting the kneading zone to the center line of the screw shaft. Further, it is preferred that the kneading zone of the twin-screw extruder are arranged over the entire area without being unevenly located at a specific position within the screw.

In order to remove reaction by-products or thermally degraded substances, etc., it is preferred to provide a vent vacuum zone and reduce the pressure to a gauge pressure of -0.07 MPa or less for melt-kneading, and it is more preferred to reduce the pressure to a gauge pressure of -0.08 MPa or less for melt-kneading. Here, the gauge pressure indicates a pressure when atmospheric pressure is referred to as zero, and the lower the pressure, the higher the degree of vacuum and the higher the ability to remove volatile components. In case where the gauge pressure in the vent vacuum zone exceeds -0.07 MPa, that is, if the degree of vacuum is low, it is not preferable because the volatile components cannot be sufficiently removed, and impurities remain in the polyamide resin composition (B). By sufficiently removing volatile components in the vent vacuum zone, it becomes possible to reduce the amount of impurities in melt kneaded substances. There is no particular restriction on the number of vent vacuum zones, and it is preferred to install one to a plurality of vent vacuum zones. There is also no particular restriction on the location of the vent vacuum zone, and but it is preferred to install at least one vent vacuum zone at a location from the sampling position to a position before the positions of L/D0 = 0 to 10 because the above-described volatile components can be effectively removed.

It is preferred to melt-knead at a condition controlling the maximum resin temperature at 180°C to 330°C, more preferably to melt-knead at 200°C to 325°C. The maximum resin temperature referred to here indicates the highest temperature among temperatures measured by resin thermometers installed evenly at multiple locations in the extruder. When the maximum resin temperature is less than 180°C, the reactivity between the polymers is low, and when it exceeds 330°C, a thermal decomposition of the polymer progresses.

In case of using a twin-screw extruder, in order to suppress a thermal deterioration, it is preferred to introduce an inert gas from the raw material charging section for melt-kneading. Nitrogen gas is preferred as the inert gas.

As a second method for producing the melt-kneaded resin composition (B 1), a method of melt-kneading the thermoplastic resin (Ba) and the resin having a reactive functional group (Bb) while elongationally fluidizing them. Since the elongationally-fluidizing kneading has a higher dispersion efficiency than a shear fluidizing generally used during melt kneading, the reaction proceeds efficiently, especially in case of alloying accompanying a reaction such as reactive processing.

In case where the melt-kneaded resin composition (B 1) is produced by melt-kneading while elongationally fluidizing, melt-kneading using an extruder is preferably used, and as the extruder, exemplified are a single-screw extruder and a twin-screw extruder, and a multi-screw extruder with three or more screws. Among these, a single-screw extruder and a twin-screw extruder are preferably used, and a twin-screw extruder is particularly preferably used. Further, there are no particular restrictions on the screws used in such a twin-screw extruder, and screws such as fully-meshed type, incompletely-meshed type, and non-meshed type can be used. From the viewpoint of kneading property and reactivity, a fully-intermeshed type is preferable. Further, the screws may be rotated in the same direction or in different directions, but from the viewpoint of kneading property and reactivity, preferably they are rotated in the same direction. The most preferred screws are same direction-rotating fully meshing type.

In order to provide an elongationally fluidizing field suitable for reactive processing, the ratio of the total length of the elongationally fluidizing zone to the total length of the extruder screw is preferably in the range of 5 to 60%, more preferably 10 to 55%, and further preferably in the range of 15 to 50%.

When the length of the elongationally fluidizing zone in the screw of the extruder is referred to as Lk and the screw diameter is referred to as D0, it is preferred that Lk/D0 = 0.2 to 10 from the viewpoint of kneading property and reactivity. It is more preferably 0.3 to 9, and further preferably 0.5 to 8. When a plurality of elongationally fluidizing zones are provided, it is preferred that all of the respective elongationally fluidizing zones satisfy the above-described range of Lk/D0. Further, in the present invention, it is preferred that the elongationally fluidizing zones are arranged over the entire area of the screw, without being unevenly arranged at a specific position within the screw.

As the screw configuration of the elongationally fluidizing zone, exemplified are preferable examples such as a configuration consisting of a kneading disk wherein the helical angle θ, which is an angle between the top of the disk tip side and the top of the rear side of the kneading disk, is in the range of 0°<θ< 90° in the half-rotation direction of the screw to form a twist kneading disc, a configuration consisting of a flight screw wherein a resin passage, whose cross-sectional area is reduced from the screw tip side to the rear end side, is formed in the flight part of the flight screw, and a configuration wherein a resin passage, in which the cross-sectional area through which the molten resin passes is gradually reduced, is provided in the extruder.

It is preferred that the extrusion rate per screw 1 rpm is 0.01 kg/h or more. The extrusion rate indicates the weight (kg) of melt kneaded substances extruded per one hour from the extruder. If the extrusion rate per 1 rpm of the screw is less than 0.01 kg/h, a problem occurs that the extrusion rate relative to the rotational speed is not sufficient, the residence time in the extruder becomes too long, it causes thermal deterioration and causes the filling rate of the resin inside the extruder to become very small, and sufficient kneading is not possible. Further, although the rotational speed of the screw is not particularly restricted, it is preferably 10 rpm or more, more preferably 50 rpm or more, and further preferably 80 rpm or more. Furthermore, the extrusion rate is preferably 0.1 kg/h or more, more preferably 0.15 kg/h or more, and further preferably 0.2 kg/h or more.

The residence time in the extruder is preferably 1 to 30 minutes, more preferably 1.5 to 28 minutes, and further preferably 2 to 25 minutes. The residence time means a value representing the average residence time from when raw materials are supplied to the extruder until they are discharged. The residence time is defined as the time from the timing when about 1g of a coloring agent together with the raw material is charged from a position of the base of the screw where the raw material is supplied under a steady state of melt kneading of uncolored melt kneaded substances adjusted to a predetermined extrusion rate, until the timing when the mixture is extruded from the discharge port of the extruder and the degree of coloring of the extrudate by the coloring agent reaches its maximum. In case where the residence time is less than 1 minute, the reaction time in the extruder is short and the reaction is not sufficiently promoted, which is not preferable. In case where the residence time is longer than 30 minutes, it is not preferred because the long residence time causes a thermal deterioration of the resin.

In any of a case where the melt-kneaded resin composition (B1) is produced using a twin-screw extruder with L/DO of 50 or more and a case where the melt-kneaded resin composition (B1) is produced by melt-kneading while elongationally fluidizing, with respect to the blending ratio of the thermoplastic resin (Ba) and the resin (Bb) having a reactive functional group, if the thermoplastic resin (Ba) is in the range of 80 to 60% by weight and the resin (Bb) is in the range of 20 to 40% by weight, the thermoplastic resin (Ba) forms a continuous phase and the resin (Bb) forms a dispersed phase, the compound (Bc) with a diameter of 1-100 nm generated by the reaction of (Ba) and (Bb) is contained in the particles made of the resin (Bb), and further, the area ratio occupied by the compound (Bc) easily becomes 20% or more, which are preferred.

The composition of the present invention contains, in addition to the reinforcing fibers (A) and the thermoplastic resin (B), the rosin resin (C) having an acid value and/or hydroxyl value of 100 mgKOH/g or more. The rosin resin (C) is not particularly limited, and various known rosin resins can be used. As the above-described rosin resin, for example, exemplified are purified rosin obtained by purifying a natural rosin (gum rosin, tall oil rosin, wood rosin) derived from horsetail pine, slash pine, merkushi pine, Su Mao pine, loblolly pine, Daio pine, etc. by vacuum distillation method, steam distillation method, extraction method, recrystallization method, etc. (hereinafter, natural rosin and purified rosin are also collectively referred to as unmodified rosin), hydrogenated rosin obtained by hydrogenating the above-described unmodified rosin, disproportionated rosin obtained by subjecting the above-described unmodified rosin to a disproportionation reaction, polymerized rosin obtained by polymerizing the above-described unmodified rosin, acid modified rosin such as acrylated rosin, maleated rosin, or fumarated rosin, esterified products of the above-described rosin (hereinafter, these esterified products are referred to as rosin esters), rosin phenol resin, rosin polyol, and the like. The above-described rosin resins may be used alone or in combination of two or more kinds.

The above-described rosin resin (C) having an acid value and/or hydroxyl value of 100 mgKOH/g or more is at least one selected from the group consisting of hydrogenated rosin, polymerized rosin, acid modified rosin, rosin ester, and rosin polyol.

By setting the acid value and/or hydroxyl value of the above-described rosin resin (C) having an acid value and/or hydroxyl value of 100 mgKOH/g or more to 100 mgKOH/g or more, the dispersibility of fibers in the fiber-reinforced resin can be improved, the mechanical strength of the molded article becomes excellent and the appearance quality, especially the blackness, of the molded article can be enhanced. 120 mgKOH/g or more is more preferable, 130 mgKOH/g or more is further preferable, and 150 mgKOH/g or more is most preferable.

Furthermore, it is preferred that the acid value and/or hydroxyl value of the above-described rosin resin is 300 mgKOH/g or less. By setting the acid value and/or hydroxyl value to 300 mgKOH/g or less, modification of the thermoplastic resin (B) as the matrix resin can be suppressed, and a decrease in tensile strength and impact strength can be suppressed. It is preferably 270 mgKOH/g or less, more preferably 260 mgKOH/g or less, and further preferably 250 mgKOH/g or less.

Where, in the present invention, the hydroxyl value and acid value are values measured according to JIS K 0070.

The above-described rosin resin (C) having an acid value and/or hydroxyl value of 100 mgKOH/g or more is preferably at least one selected from the group consisting of hydrogenated rosin, polymerized rosin, acid modified rosin, rosin ester, and rosin polyol because it has excellent mechanical strength in the fiber-reinforced resin, and at least one selected from the group consisting of acid modified rosin or rosin polyol is particularly preferred.

Hereinafter, acid modified rosin, unmodified rosin ester, hydrogenated rosin ester, disproportionated rosin ester, polymerized rosin ester, α,β-unsaturated carbon acid modified rosin ester, rosin phenol resin, and rosin polyol will be explained.

(Acid modified rosin)

The acid modified rosin is obtained by subjecting the above-described unmodified rosin or disproportionated rosin to an addition reaction with α,β-unsaturated carboxylic acid. The above-described α,β-unsaturated carboxylic acid is not particularly limited, and various known ones can be used. Concretely, for example, exemplified are acrylic acid, methacrylic acid, maleic acid, fumaric acid, itaconic acid, citraconic acid, muconic acid, maleic anhydride, itaconic anhydride, citraconic anhydride, muconic anhydride, and the like. Among these, acrylic acid, maleic acid, maleic anhydride, and fumaric acid are preferred. The amount of the α,β-unsaturated carboxylic acid to be used is usually about 1 part by mass to 20 parts by mass, preferably 1 part by mass to 3 parts by mass, relative to 100 parts by mass of the above-described unmodified rosin. The above-described α,β-unsaturated carboxylic acids may be used alone or in combination of two or more kinds. The method for producing the above-described α,β-unsaturated carboxylic acid modified rosin is not particularly limited, but for example, a method of adding the α,β-unsaturated carboxylic acid to the unmodified rosin or disproportionated rosin melted under heating, and subjecting this to a reaction at a temperature of about 180°C to 240°C for about 1 hour to 9 hours can be exemplified. Further, the above-described reaction may be carried out while blowing an inert gas such as nitrogen into a closed reaction system.

Further, in the above-described reaction, known catalysts such as Lewis acids such as zinc chloride, iron chloride, and tin chloride, and Bronsted acids such as para-toluene sulfonic acid and methane sulfonic acid may be used. The amount of these catalysts used is usually about 0.01% by mass to 10% by mass relative to the above-described unmodified rosin. Further, as the above-described α,β-unsaturated carboxylic acid modified rosin, one further hydrogenated as described later may be used. The α,β-unsaturated carboxylic acid modified rosin may contain a resin acid derived from the unmodified rosin or disproportionated rosin.

(Unmodified rosin ester)

The unmodified rosin ester is obtained by reacting the above-described unmodified rosin with alcohols. As the reaction condition for the unmodified rosin and the alcohols, the reaction may be carried out at approximately 250°C to 280°C for about 1 hour to 8 hours in the presence or absence of a solvent, adding an esterification catalyst as needed. The above-described alcohols are not particularly limited, and for example, exemplified are monohydric alcohols such as methanol, ethanol, propanol, and stearyl alcohol; dihydric alcohols such as ethylene glycol, diethylene glycol, triethylene glycol, propylene glycol, neopentyl glycol, and dimer diol; trihydric alcohols such as glycerin, trimethylolethane, and trimethylolpropane; tetrahydric alcohols such as pentaerythritol and diglycerin; hexavalent alcohols such as dipentaerythritol, etc. Among these, polyhydric alcohols having two or more hydroxyl groups are preferred, and in particular, glycerin and pentaerythritol are more preferred. The above-described alcohols may be used alone or in combination of two or more kinds.

(Hydrogenated rosin ester)

The hydrogenated rosin ester is obtained by esterifying a hydrogenated rosin obtained by hydrogenating the above-described unmodified rosin by further reacting with alcohols. The above-described hydrogenated rosin can be obtained using various known methods. Concretely, for example, the unmodified rosin may be heated and reacted (hydrogenated) under a hydrogen pressurized condition in the presence of a hydrogenation catalyst. As the hydrogenation catalyst, various known catalysts such as supported catalysts and metal powders can be used. As the supported catalysts, exemplified are palladium-carbon, rhodium-carbon, ruthenium-carbon, platinum-carbon, etc., and as the metal powders, exemplified are nickel, platinum, etc. The amount of the catalyst used is usually about 0.01 part by mass to 5 parts by mass, preferably about 0.01 parts by mass to 2 parts by mass, relative to 100 parts by mass of rosin as a raw material. The hydrogen pressure when hydrogenating the above-described unmodified rosin is about 2 MPa to 20 MPa, preferably about 5 MPa to 20 MPa. The reaction temperature when hydrogenating the above-described unmodified rosin is about 100°C to 300°C, preferably about 150°C to 300°C.

The above-described hydrogenation may be performed at a condition where the unmodified rosin dissolved in a solvent, as needed. The solvent used is not particularly limited, but any solvent may be used as long as it is inert to the reaction and easily dissolves the raw materials and products. Concretely, for example, cyclohexane, n-hexane, n-heptane, decalin, tetrahydrofuran, dioxane, etc. can be used alone or in combination of two or more kinds. The amount of the solvent used is not particularly limited, but it may be set usually so that the solid content is 10% by mass or more, preferably in the range of about 10% to 70% by mass, relative to the unmodified rosin. As the reaction condition for the above-described hydrogenated rosin and alcohols, the reaction may be carried out at approximately 250°C to 280°C for about 1 hour to 8 hours in the presence or absence of a solvent, adding an esterification catalyst as needed. The alcohols used in esterifying the hydrogenated rosin are the same as those described above. Where, the order of the hydrogenation reaction and the esterification reaction is not limited to the above, and the hydrogenation reaction may be performed after the esterification reaction. Further, the obtained hydrogenated rosin ester may be further subjected to the above-described hydrogenation reaction.

(Disproportionated rosin ester)

The disproportionated rosin ester is one obtained by further reacting an alcohol to esterify the disproportionated rosin obtained by subjecting the above-described unmodified rosin to a disproportionation reaction. As the method for obtaining the above-described disproportionated rosin, various known methods can be used. Concretely, for example, the unmodified rosin may be heated and reacted (disproportionated) in the presence of a disproportionation catalyst. As the disproportionation catalyst, various known ones can be exemplified such as supported catalysts such as palladium-carbon, rhodium-carbon, and platinum-carbon, metal powders such as nickel and platinum, and iodides such as iodine and iron iodide. The amount of the catalyst used is usually about 0.01 part by mass to 5 parts by mass, preferably about 0.01 part by mass to 1 part by mass, relative to 100 parts by mass of rosin as a raw material. The reaction temperature when disproportionating the above-described unmodified rosin is about 100°C to 300°C, preferably about 150°C to 290°C. As the reaction condition of the disproportionated rosin and alcohols, the reaction may be carried out at about 250°C to 280°C for about 1 to 8 hours in the presence or absence of a solvent, adding an esterification catalyst as needed. The alcohols used in esterifying the disproportionated rosin are the same as those described above. Where, the order of the disproportionation reaction and the esterification reaction is not limited to the above, and the disproportionation reaction may be performed after the esterification reaction.

(Polymerized rosin ester)

The polymerized rosin ester is obtained by reacting alcohols with polymerized rosin. The polymerized rosin is a rosin derivative containing dimerized resin acids. As the method for producing the above-described polymerized rosin, a known method can be employed. Concretely, for example, can be exemplified a method for reacting the unmodified rosin as a raw material at a reaction temperature of about 40°C to 160°C for about 1 to 5 hours in a solvent such as toluene or xylene containing a catalyst such as sulfuric acid, hydrogen fluoride, aluminum chloride, or titanium tetrachloride, or the like. As the concrete examples of the above-described polymerized rosin, exemplified are gum-based polymerized rosin using gum rosin as a raw material (for example, trade name "polymerized rosin B-140", supplied by Shinshu (Buhei) Linka Co., Ltd.), tall oilbased polymerized rosin using tall oil rosin (for example, trade name "Silvatac 140", supplied by Arizona Chemical Corporation), wood-based polymerized rosin using wood rosin (for example, trade name "Dymarex", supplied by Hercules Corporation), and the like. Further, as the above-described polymerized rosin, polymerized rosins subjected to various treatments such as hydrogenation, disproportionation, and α,β-unsaturated carboxylic acid modification such as acrylation, maleation, and fumarization may be used. Moreover, the various treatments may be performed alone or in combination of two or more kinds. As the reaction condition for the above-described polymerized rosin and alcohols, the reaction may be carried out at approximately 250°C to 280°C for about 1 hour to 8 hours in the presence or absence of a solvent, adding an esterification catalyst as needed. Further, the above-described polymerized rosin may be further used in combination with the above-described unmodified rosin, and they may be reacted with alcohols. The alcohols used to esterify the polymerized rosin are the same as those described above. Where, the order of the polymerization reaction and the esterification reaction is not limited to the above, and the polymerization reaction may be performed after the esterification reaction.

(α,β-unsaturated carboxylic acid modified rosin ester)

The α,β-unsaturated carboxylic acid modified rosin ester is obtained by reacting the above-described α,β-unsaturated carboxylic acid modified rosin with alcohols. As the reaction condition of the above-described α,β-unsaturated carboxylic acid modified rosin and alcohols is not particularly limited, but for example, can be exemplified a condition in which an alcohol is added to α,β-unsaturated carboxylic acid modified rosin melted under heating, and the reaction is carried out at a temperature of about 250°C to 280°C for about 15 hours to 20 hours. Further, the above-described reaction may be carried out while blowing an inert gas such as nitrogen into a closed reaction system, and the aforementioned catalyst may be used. The alcohols used in esterifying the α,β-unsaturated carboxylic acid modified rosin are the same as above.

(Rosin phenol resin)

The rosin phenolic resin is obtained by reacting the above-described unmodified rosin with phenols. The phenols are not particularly limited, and various known phenols can be used. Concretely, exemplified are alkyl phenols such as cresol, butyl phenol, octyl phenol, and nonyl phenol, phenols, bisphenols, naphthols, and the like. These may be used alone or in combination of two or more kinds. The amount of phenols used may be usually about 0.8 mol to 1.5 mol relative to 1 mol of the raw material rosin. The method for producing the rosin phenol resin is not particularly limited, but for example, can be exemplified a method for reacting the unmodified rosin and phenols by heating in the presence of an acid catalyst as needed. The reaction temperature may be usually 180 to 350°C for about 6 to 18 hours. Where, the acid catalyst capable of being used for the reaction is not particularly limited, but for example, exemplified are inorganic acid catalysts such as sulfuric acid, hydrogen chloride, and boron trifluoride, and organic acid catalysts such as para-toluene sulfonic acid and methane sulfonic acid. In case of using an acid catalyst, it may be used in an amount of about 0.01 part by mass to 1.0 part by mass relative to 100 parts by mass of the above-described unmodified rosin. Further, the rosin phenol resin may be one obtained by further reacting the resin obtained by the above-described reaction with an alcohol to esterify it. The alcohol used in this case is the same as described above.

(Rosin polyol)

The rosin polyol is a compound which has at least two rosin skeletons in the molecule and at least two hydroxyl groups in the molecule. As the above-described rosin polyol, for example, can be exemplified a reaction product of the above-described unmodified rosin, hydrogenated rosin, or disproportionated rosin and an epoxy resin (referred to in JP-A-5-155972). As the above-described epoxy resins, for example, exemplified are bisphenol-type epoxy resins, novolak-type epoxy resins, resorcinol-type epoxy resins, phenol aralkyl-type epoxy resins, naphthol aralkyl-type epoxy resins, aliphatic polyepoxy compounds, alicyclic epoxy compounds, glycidyl amine-type epoxy compounds, glycidyl ester-type epoxy compounds, monoepoxy compounds, naphthalene-type epoxy compounds, biphenyl-type epoxy compounds, epoxidized polybutadiene, epoxidized styrene-butadiene-styrene block copolymer, epoxy group-containing polyester resins, epoxy group-containing polyurethane resins, epoxy group-containing acrylic resins, stilbene-type epoxy compounds, triazine-type epoxy compounds, fluorene-type epoxy compounds, triphenol methane-type epoxy compounds, alkyl-modified triphenol methane-type epoxy compounds, dicyclopentadiene-type epoxy compounds, aryl alkylene-type epoxy compounds, etc.

As the above-described bisphenol-type epoxy resins, for example, exemplified are bisphenol A-type epoxy resin, bisphenol F-type epoxy resin, bisphenol S-type epoxy resin, bisphenol AD-type epoxy resin, hydrogenated bisphenol A-type epoxy resin, hydrogenated bisphenol F-type epoxy resin, hydrogenated bisphenol AD-type epoxy resin, tetra bromo bisphenol A-type epoxy resin, and the like.

As the above-described novolac-type epoxy resins, for example, exemplified are cresol novolac-type epoxy resin, phenol novolac-type epoxy resin, α-naphthol novolac-type epoxy resin, bisphenol A-type novolac-type epoxy resin, brominated phenol novolac-type epoxy resin, and the like.

As the above-described aliphatic polyepoxy compounds, for example, exemplified are 1,4-butanediol diglycidyl ether, 1,6-hexanediol diglycidyl ether, ethylene glycol diglycidyl ether, propylene glycol diglycidyl ether, polyethylene glycol diglycidyl ether, propylene glycol diglycidyl ether, neopentyl glycol diglycidyl ether, glycerol diglycidyl ether, glycerol triglycidyl ether, trimethylolpropane diglycidyl ether, trimethylolpropane triglycidyl ether, diglycerol triglycidyl ether, sorbitol tetraglycidyl ether, diglycidyl ether, etc.

As the above-described alicyclic epoxy compounds, for example, exemplified are 3,4-epoxy cyclohexylmethyl-3',4'-epoxy cyclohexane carboxylate, 2-(3,4-epoxy cyclohexyl-5,5-spiro-3,4-epoxy)cyclohexane-meta-dioxane, bis(3,4-epoxy cyclohexyl methyl)adipate, bis(3,4-epoxy-6-methyl cyclohexyl methyl)adipate, 3,4-epoxy-6-methyl cyclohexyl-3,4-epoxy-6'-methylcyclohexane carboxylate, methylene bis(3,4-epoxy cyclohexane), dicyclopentadiene diepoxide, ethylene glycol di(3,4-epoxy cyclohexyl methyl)ether, ethylene bis(3,4-epoxy cyclohexane carboxylate), lactone-modified 3,4-epoxy cyclohexyl methyl-3',4'-epoxy cyclohexane carboxylate, etc.

As the above-described glycidyl amine-type epoxy compounds, for example, exemplified are tetraglycidyl diamino diphenylmethane, triglycidyl para-aminophenol, triglycidyl meth-aminophenol, and tetraglycidyl meth-xylylene diamine, etc.

As the above-described glycidyl ester-type epoxy compounds, for example, exemplified are diglycidyl phthalate, diglycidyl hexahydro phthalate, diglycidyl tetrahydro phthalate, etc.

The method for producing the above-described rosin polyol is not particularly limited, but for example, exemplified is a method of carrying out a ring-opening addition reaction between the unmodified rosin, hydrogenated rosin, or disproportionated rosin and an epoxy resin at 120°C to 200°C in the presence of a catalyst. As the catalyst, for example, amine-based catalysts such as trimethyl amine, triethyl amine, tributyl amine, benzyl dimethyl amine, pyridine, and 2-methyl imidazole, quaternary ammonium salts such as benzyl trimethyl ammonium chloride, Lewis acids, boric acid esters, organometallic compounds, organic metal salts, etc. can be used.

The softening point of the above-described rosin resin (C) having an acid value and/or hydroxyl value of 100 mgKOH/g or more is 80°C to 200°C, and from the viewpoint of being excellent in mechanical strength as a fiber-reinforced resin, and excellent in handling and processability, it is preferably about 80°C to 180°C, more preferably about 90°C to 160°C.

The number average molecular weight of the rosin resin (C) having an acid value and/or hydroxyl value of 100 mgKOH/g or more is preferably 100 to 50,000. If the number average molecular weight is 100 or more, the flexural strength and tensile strength of the molded article can be more improved. The number average molecular weight is more preferably 300 or more, further preferably 500 or more, and most preferably 1,000 or more. Further, if the number average molecular weight is 50,000 or less, because the viscosity of rosin resin (C) having an acid value and/or hydroxyl value of 100 mgKOH/g or more is moderately low, the impregnation property into the reinforcing fibers (A) contained in the molded article is excellent, the dispersibility of the reinforcing fibers (A) in the molded article can be more improved. The number average molecular weight is more preferably 25,000 or less, further preferably 15,000 or less, and still further preferably 10,000 or less. Where, such a number average molecular weight of the compound can be determined using gel permeation chromatography (GPC).

The content of the rosin resin (C) having an acid value and/or hydroxyl value of 100 mgKOH/g or more in the composition of the present invention is 0.5 to 30 parts by weight relative to the total of 100 parts by weight of the carbon fibers (A), the thermoplastic resin (B) and the rosin resin (C) having an acid value and/or hydroxyl value of 100 mgKOH/g or more. If the content of rosin resin (C) having an acid value and/or hydroxyl value of 100 mgKOH/g or more is 0.5 parts by weight or more, the flowability of the reinforcing fibers (A) in the molded article is more improved, and the dispersibility thereof is more improved. The content is preferably 1 part by weight or more, and more preferably 2 parts by weight or more. On the other hand, if the content of the rosin resin (C) having an acid value and/or hydroxyl value of 100 mgKOH/g or more is 30 parts by weight or less, the tensile strength and impact strength of the molded article can be more improved. It is preferably 20 parts by weight or less, more preferably 15 parts by weight or less, and further preferably 10 parts by weight or less.

It is preferred that the rosin resin (C) having an acid value and/or hydroxyl value of 100 mgKOH/g or more has a heating loss of 5% by weight or less when the temperature is elevated at 10°C/min (in air) in the molding temperature. It is more preferably 3% by weight or less, and further preferably 1.5% or less. When such a heating loss is 5% by weight or less, it is possible to suppress the generation of decomposition gas when impregnated into the reinforcing fibers (A), and it is possible to suppress the generation of voids when molded. Furthermore, the gas generation can be suppressed, particularly during molding at a high temperature.

Here, the weight loss at the molding temperature of the rosin resin (C) having an acid value and/or hydroxyl value of 100 mgKOH/g or more can be determined using a platinum sample pan under air atmosphere at a condition of a heating rate of 10°C/min, by measuring the weight at the molding temperature by thermogravimetric analysis (TGA).

The molded article and molding material of the present invention may contain other components in addition to the above-described components (A) to (C) as long as the object of the present invention is not impaired. As examples of other components, exemplified are thermosetting resins, inorganic fillers other than carbon fibers, flame retardants, crystal nucleating agents, ultraviolet absorbers, antioxidants, impact absorbers, vibration damping agents, antibacterial agents, insect repellents, deodorants, coloring inhibitors, thermal stabilizers, mold release agents, antistatic agents, plasticizers, lubricants, colorants, pigments, dyes, foaming agents, antifoaming agents, coupling agents, etc.

Next, as the method for molding a molded article using a molding material made of the composition of the present invention, a molding method using a mold is preferred, and various molding methods such as injection molding, extrusion molding, and press molding can be used. In particular, by a molding method using an injection molding machine, a stable molded article can be obtained continuously. The conditions for injection molding are not particularly specified, but for example, conditions of injection time: 0.1 second to 20 seconds, more preferably 1 second to 10 seconds, back pressure: 0.1 MPa to 20 MPa, more preferably 3 MPa to 15 MPa, holding pressure: 1 MPa to 150 MPa, more preferably 5 MPa to 100 MPa, holding pressure time: 1 second to 30 seconds, more preferably 5 seconds to 20 seconds, cylinder temperature: 180°C to 350°C, mold temperature: 20°C to A condition of 160°C are preferred. Here, the cylinder temperature indicates a temperature of the part of the injection molding machine which heats and melts the molding material, and the mold temperature indicates a temperature of the mold into which the resin is injected to form a predetermined shape. By appropriately selecting these conditions, especially the injection time, back pressure, and mold temperature, the fiber length of the reinforcing fibers in the molded article can be easily adjusted so as to satisfy the equation [1] described later.

In the composition of the present invention (in the molding material made of the composition of the present invention), the weight average fiber length (Lw) of the reinforcing fibers (A) is 0.1 to 7.0 mm. If the weight average fiber length (Lw) is 0.1 mm or more, the mechanical properties of the molded article, especially the flexural strength and tensile strength, are more improved. Lw is preferably 0.3 mm or more. On the other hand, if the weight average fiber length (Lw) is 7 mm or less, because the entanglement between reinforcing fibers (A) is suppressed and the dispersibility is more improved, the mechanical properties and appearance quality of the molded article are more improved. Lw is more preferably 5 mm or less, and further preferably 4 mm or less. Here, the "weight average fiber length" in the present invention indicates a weight average fiber length calculated by the following equation which applies the weight average molecular weight calculation method to fiber length calculation, and considers the contribution of fiber length, without simply taking the number average. However, the following equation is applied in case where the fiber diameter and density of the reinforcing fibers (A) are constant.

$$\text{Weight average fiber length} = \Sigma(Mi^2 \times Ni)/\Sigma(Mi \times Ni)$$

Mi: fiber length (mm)
Ni: number of reinforcing fibers with fiber length Mi

The above-described weight average fiber length can be measured by the following method. Using an optical microscope equipped with a hot stage, a test piece is appropriately cut out from the molded article, it is heated at a state where it is sandwiched between glass plates on a hot stage set appropriately at 150 to 350°C to match the melting temperature of the thermoplastic resin (B) used, to be formed at a film-like shape and uniformly dispersed, and it is observed by the optical microscope (magnification: 50 to 200 times) at a state the thermoplastic resin (B) is molten. The fiber lengths of 1,000 randomly selected reinforcing fibers (A) are measured, and the weight average fiber length (Lw) is calculated from the above-described equation. Alternatively, a test piece cut out from the molded article is placed in a solvent in which the thermoplastic resin (B) is dissolved, and a heat treatment is appropriately applied to prepare a solution in which the reinforcing fibers (A) are uniformly dispersed. Thereafter, the solution is filtered and the reinforcing fibers (A) dispersed on the filter paper are observed using an optical microscope (magnification: 50 to 200 times). The fiber lengths of 1,000 randomly selected reinforcing fibers (A) are measured, and the weight average fiber length (Lw) is calculated from the above-described equation. Further, as the filter paper used at this time, exemplified is a quantitative filter paper (model number: No. 5C) supplied by Advantech Corporation, or the like.

Next, embodiments in which the composition of the present invention is used as a molding material will be explained.

It is preferred that the molding material in the present invention preferably has a fiber bundle containing reinforcing fibers (A), formed as continuous fiber bundles, in the thermoplastic resin (B). A composite, in which the rosin resin (C) having an acid value and/or hydroxyl value of 100 mgKOH/g or more is filled between the single fibers of the fiber bundle, may be contained. The composite is made by impregnating a fiber bundle with the rosin resin (C) having an acid value and/or hydroxyl value of 100 mgKOH/g or more, and is in a state in which the reinforcing fibers (A) are dispersed like islands in the sea of the rosin resin (C) having an acid value and/or hydroxyl value of 100 mgKOH/g or more. The molding material of the present invention preferably contains the thermoplastic resin (B) on the outside of the above-described fiber bundle or composite. A configuration, in which in a cross section perpendicular to the longitudinal direction of the molding material, the thermoplastic resin (B) is arranged to cover the periphery of the fiber bundle or composite, or the fiber bundle or composite and the thermoplastic resin (B) are arranged in layers and the outermost layer is the thermoplastic resin (B), is desirable.

In case where the molding material of the present invention contains the rosin resin (C) having an acid value and/or hydroxyl value of 100 mgKOH/g or more, the rosin resin (C) having an acid value and/or hydroxyl value of 100 mgKOH/g or more often has a low molecular weight, and is often in a condition of a solid which is usually relatively brittle and easily crushed at a room temperature or a liquid like that. By employing a configuration containing the thermoplastic resin (B) on the outside of the composite, the high molecular weight thermoplastic resin (B) protects the composite, and the crushing, scattering, or the like of the rosin resin (C) having an acid value and/or hydroxyl value of 100 mg KOH/g or more due to impact or abrasion during transportation or handling of the molding material can be suppressed, and the shape of the molding material can be maintained. From the viewpoint of handling property, it is preferred that the molding material of the present invention maintains the above-described shape until it is subjected to molding.

In case where the composition of the present invention is used as a molding material, the rosin resin (C) having an acid value and/or hydroxyl value of 100 mgKOH/g or more may be contained in any of the raw materials in the molding material of the present invention. It may be contained in the fiber bundle or composite, it may be contained in the thermoplastic resin (B), or it may be contained in both. For example, as the thermoplastic resin composition containing the thermoplastic resin (B) and the rosin resin (C) having an acid value and/or hydroxyl value of 100 mgKOH/g or more, can be exemplified an embodiment in which it is contained in the resin coating the fiber bundle or composite, an embodiment in which the rosin resin (C) having an acid value and/or hydroxyl value of 100 mgKOH/g or more is impregnated into fiber bundles (F), an embodiment in which it is applied to the surfaces of reinforcing fibers (A) or contained inside the single fibers, etc.

With respect to the composite, the thermoplastic resin (B) and the rosin resin (C) having an acid value and/or hydroxyl value of 100 mgKOH/g or more, they may be in either a state where the thermoplastic resin (B) and the rosin resin (C) having an acid value and/or hydroxyl value of 100 mgKOH/g or more partially enter into a part of the composite near the boundary thereof and they are in a compatible state, or a state where the thermoplastic resin (B) and the rosin resin (C) having an acid value and/or hydroxyl value of 100 mgKOH/g or more are impregnated into the fiber bundle.

In case where the composition of the present invention is used as a molding material and the molding material contains two kinds of reinforcing fibers, it is preferred that two kinds of reinforcing fibers, for example, carbon fibers and organic fibers or glass fibers, are in a state unevenly distributed in the cross section of the fiber bundle. Here, the cross section of the fiber bundle indicates a cross section perpendicular to the fiber longitudinal direction of the fiber bundle. By unevenly distributing carbon fibers and organic fibers or glass fibers in the cross section of the fiber bundle, the entanglement of carbon fibers and organic fibers or glass fibers during molding is suppressed, and a molded article in which the carbon fibers and organic fibers or glass fibers are evenly dispersed can be obtained. Therefore, the mechanical properties of the molded article, particularly the impact strength and appearance quality, can be more improved. Here, in the present invention, "uneven distribution" indicates a state where respective carbon fibers and organic fibers or glass fibers are not evenly present in all regions in the cross section of the fiber bundle but are present partially unevenly. For example, in the cross section of the fiber bundle, a so-called core-sheath structure such as an embodiment where carbon fibers involve organic fibers or glass fibers, or an embodiment where organic fibers or glass fibers involve carbon fibers, a structure in which a bundle of carbon fibers and a bundle of organic fibers or glass fibers are present in a state separated from each other by a certain boundary, or the like, are exemplified as embodiments of "uneven distribution" in the present invention. Where, in the present invention, the term of "involve " indicates an embodiment in which carbon fibers are arranged in the core part and organic fibers or glass fibers are arranged in the sheath part, an embodiment in which organic fibers or glass fibers are arranged in the core part and carbon fibers are arranged in the sheath part, etc. In the cross section of the fiber bundle, at least a part of each of the carbon fibers and the organic fibers or glass fibers are in contact with the thermoplastic resin (B) of the outer layer. At this time, in the embodiments in which the carbon fibers, organic fibers, or glass fibers are in contact with the thermoplastic resin (B), an embodiment in which the carbon fibers, organic fibers, or glass fibers are in contact with the thermoplastic resin (B) via the aforementioned rosin resin (C) is also included.

Where, in the present invention, as a method for confirming that carbon fibers, organic fibers, or glass fibers are unevenly distributed in the fiber bundle, for example, exemplified is a method for observing a cross section perpendicular to the longitudinal direction of the fibers of the molding material with an optical microscope set at a magnification of 300 times, and performing image processing and analysis of the obtained microscopic image.

Subsequently, a method for producing a molding material according to the present invention will be explained. The molding material in the present invention can be obtained not only by the following method but also by any known production method. For example, it can be obtained by the following method.

First, rovings of the reinforcing fibers (A) are doubled in parallel to the longitudinal direction of the fibers to prepare a fiber bundle having the reinforcing fibers (A). Then, as needed, the molten rosin resin (C) is impregnated into the fiber bundle to produce a composite. Further, the fiber bundle or composite is introduced into an impregnation die filled with molten thermoplastic resin (B), and the resin composition containing the thermoplastic resin (B) is coated on the outside of the fiber bundle or composite, and then pulled out through a nozzle. An example of this method is to pelletize it into a predetermined length after cooling and solidifying to obtain a molding material. The thermoplastic resin (B) may be impregnated into the fiber bundle as long as it is contained in the outside of the composite.

Further, a method may be employed wherein the fiber bundle produced by the method described above is impregnated with the molten rosin resin (C) to produce a composite, and the outside of the composite may be coated with the thermoplastic resin (B). As the method of bonding at least the thermoplastic resin (B) to the surface of a fiber bundle made of reinforcing fibers (A), it is preferred to place the molten thermoplastic resin (B) so as to be in contact with the surface of the fiber bundle, and to cool and solidify it. This method is not particularly limited, but more concretely, a method of using an extruder and a coating die for wire coating and continuously coating the thermoplastic resin (B) around the fiber bundle, a method of arranging a molten film-like thermoplastic resin (B) using an extruder and a T-die on one or both surface sides of a fiber bundle which has been flattened with a roll or the like, and integrating it with a roll or the like, etc. can be exemplified.

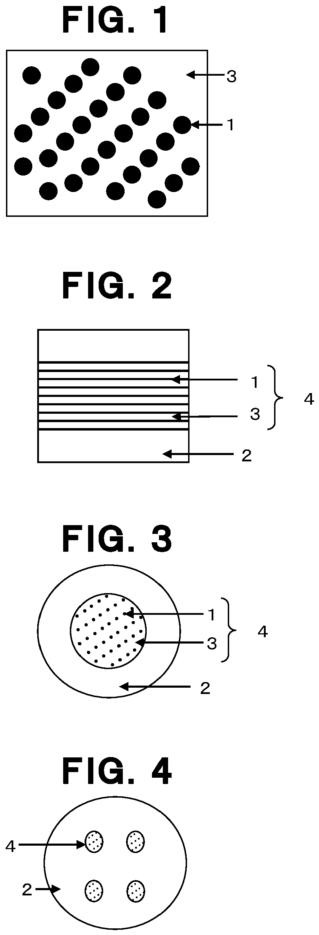

For example, Figs. 2 and 3 are schematic diagrams showing an example of a preferable cross-sectional form of the molding material of the present invention. Symbol 1 indicates the reinforcing fibers (A), symbol 2 indicates the thermoplastic resin (B), symbol 3 indicates the rosin resin (C), and symbol 4 indicates the fiber bundle.

The cross-sectional form of the molding material is not limited to that shown in the figure as long as the thermoplastic resin (B) is arranged so as to be in contact with the outside of the fiber bundle.

The cross section of the molding material preferably has a configuration in which the fiber bundle becomes a core material and is sandwiched between layers of thermoplastic resin (B), as shown in the vertical cross section of Fig. 2. Further, as shown in the cross-sectional form of Fig. 3, a configuration is also preferable which forms a core-sheath structure in which the fiber bundle is arranged to form a core structure and the periphery thereof is covered with the thermoplastic resin (B). Further, a configuration in which the thermoplastic resin (B) is arranged to cover a plurality of fiber bundles as shown in Fig. 4 is also preferable. In that case, the number of fiber bundles is preferably about 2 to 6. Further, Fig. 1 is a schematic diagram showing an example of a cross-sectional form of a fiber bundle in the present invention. As shown in Fig. 1, in the fiber bundle according to the present invention, the rosin resin (C) is filled between respective single fibers 1 of the reinforcing fibers (A). Namely, the respective single fibers of the reinforcing fibers (A) are dispersed like an island in a sea of the rosin resin (C). Where, in the present invention, a vertical section means a section in a plane including the axial direction, and a transverse section means a section in a plane perpendicular to the axial direction. Further, in case where the molding material is columnar such as a pellet, the axial direction indicates the axial center of the column.

Where, the length of the reinforcing fibers (A) and the length of the molding material are substantially the same. This is clear, for example, from the embodiment shown in Fig. 3. In the molding material shown in Fig. 3, respective single fibers of the reinforcing fibers (A) are arranged almost in parallel in the axial direction of the molding material (in the same direction), and the length of the reinforcing fibers (A) is substantially the same as the length of the molding material. In Fig. 3, black dots indicate reinforcing fibers (A), and the white part indicates the rosin resin (C). By the condition where the length of the fiber bundle is substantially the same as the length of the molding material, because the fiber length of the reinforcing fibers (A) in the molded article can be lengthened, better mechanical properties can be obtained.

The "arranged almost in parallel" mentioned here indicates a state in which the long axes of the reinforcing fibers (A) and the long axis of the molding material are directed in the same direction. The angle between the axes to each other is preferably 20° or less, more preferably 10° or less, and further preferably 5° or less. Further, the "substantially the same length" means that the reinforcing fibers (A) are not intentionally cut inside the molding material, or the reinforcing fibers (A) which are significantly shorter than the entire length of the molding material are not substantially included. In particular, although the amount of reinforcing fibers (A) shorter than the entire length of the molding material is not limited, the content of reinforcing fibers (A) with a length of 50% or less of the entire length of the molding material is preferably 30% by mass or less relative to the total of the reinforcing fibers (A), more preferably 20% by mass or less. By the condition where the reinforcing fibers (A) have substantially the same length as the molding material, the length of the reinforcing fibers (A) in the molded article can be increased, and the tensile strength and impact strength can be more improved. The length of the reinforcing fibers (A) and the molding material is preferably 18 mm or less and 3 mm or more, more preferably 15 mm or less and 5 mm or more. It is preferred that the molding material is continuous and maintains substantially the same cross-sectional shape in the longitudinal direction.

Next, an example of the method for producing a molding material according to the present invention will be described.

In the present invention, the method of impregnating the rosin resin (C) to the reinforcing fibers (A) to obtain a fiber bundle is not particularly limited, but for example, exemplified are a method having step (I) of supplying the rosin resin (C) to the reinforcing fibers (A) and attaching the rosin resin (C) to the reinforcing fibers (A) by bringing the rosin resin (C) (another resin may be compounded to the rosin resin (C). in that case, the other resin is attached to the reinforcing fibers (A) and impregnated in the same way as the rosin resin (C).) into contact with the reinforcing fibers (A) at a state molten at 100 to 300°C, and step (II) of heating the reinforcing fibers (A) attached with the rosin resin (C) and impregnating it, and the like.

In the above-described step (I), the method of supplying the rosin resin (C) and attaching it to reinforcing fibers (A) is not particularly limited, but for example, any arbitrary method used when applying an oil agent, sizing agent, and matrix resin to the reinforcing fibers (A) can be used. In particular, dipping or coating is preferably used.

Here, dipping means a method in which the rosin resin (C) is supplied to a melting bath using a pump, and the reinforcing fibers (A) are passed through the melting bath. By immersing the reinforcing fibers (A) in the melting bath of the rosin resin (C), the rosin resin (C) can be securely attached to the reinforcing fibers (A). Further, coating means a method of applying the rosin resin (C) to the reinforcing fibers (A) using a coating means such as a reverse roll, a forward rotation roll, a kiss roll, a spray, or a curtain. Here, reverse roll, forward rotation roll, and kiss roll indicate a method for supplying the molten rosin resin (C) to a roll using a pump, and applying the molten rosin resin (C) to the reinforcing fibers (A). Furthermore, a reverse roll is a method in which two rolls rotate in opposite directions to apply the molten rosin resin (C) onto the rolls, and a forward rotation roll is a method in which two rolls rotate in the same direction to apply the molten rosin resin (C) onto the rolls. Usually, in reverse roll and forward rotation roll, a method is used in which the reinforcing fibers (A) are sandwiched and rolls are further installed to ensure the rosin resin (C) to be attached. On the other hand, a kiss roll is a method for attaching the rosin resin (C) by simply contacting the roll with reinforcing fibers (A). Therefore, it is preferred to use the kiss roll when the viscosity is relatively low, but in any roll method is used, a predetermined amount of the rosin resin (C) can be applied per unit length of the fiber by applying a predetermined amount of the heated and melted rosin resin (C) and running the reinforcing fibers (A) while contacting them. Spraying is a method of utilizing the principle of atomization and spraying the molten rosin resin (C) onto the reinforcing fibers (A) by setting it at a state of a mist, and curtain is a method of applying the molten rosin resin (C) naturally dropped through small holes, or a method of applying the molten rosin resin (C) overflown from a melting vessel. Since it is easy to adjust the amount required for application, loss of the rosin resin (C) can be reduced.

Further, the melting temperature (temperature in the melting bath) when supplying the rosin resin (C) is preferably 100 to 300°C. If the melting temperature is 100°C or higher, the viscosity of the rosin resin (C) can be moderately suppressed and uneven adhesion can be suppressed. More preferably, the temperature is 150°C or higher. On the other hand, if the melting temperature is 300°C or lower, thermal decomposition of the rosin resin (C) can be suppressed even when produced over a long time. More preferably, the temperature is 250°C or lower. By bringing it into contact with the reinforcing fibers (A) in a molten state at 100 to 300°C, the rosin resin (C) can be stably supplied.

Next, the step (step (II)) of heating and impregnating the reinforcing fibers (A) to which the rosin resin (C) is attached, obtained in step (I), will be explained. Concretely, it is a step in which the rosin resin (C) is impregnated to the inside of reinforcing fibers (A) by subjecting the reinforcing fibers (A) to which rosin resin (C) is attached to operations such as applying a tension using rolls or bars, repeating widening and bundling, or applying a pressure or vibration at a temperature at which the rosin resin (C) melts. As a more concrete example, can be exemplified a method in which the reinforcing fibers (A) are passed through the heated surfaces of multiple rolls or bars in contact with each other to be widened, and in particular, a method of impregnation using a squeezing die, a squeezing roll, a roll press or a double belt press is preferably used. Here, the squeezing die is a die whose die diameter narrows in the direction of travel, and in which while bundling the reinforcing fibers (A), excessively attached rosin resin (C) is squeezed off and impregnation is accelerated. Further, the squeezing roll is a roller in which excessively attached rosin resin (C) is squeezed off and impregnation is accelerated by applying a tension to the reinforcing fibers (A). Furthermore, the roll press is a device which uses a pressure between two rolls to continuously remove the air inside the reinforcing fibers (A) and at the same time accelerates impregnation and the double belt press is a device accelerating impregnation by pressing the reinforcing fibers (A) from upper and lower sides via belts.

Further, in the step (II), it is preferred that 80 to 100% by weight of the supplied amount of the rosin resin (C) is impregnated into reinforcing fibers (A). Since it directly affects the yield, it is preferable that the amount of impregnation relative to the supplied amount is higher from the viewpoint of economy and productivity. More preferably, it is 85 to 100% by weight, and further preferably 90 to 100% by weight. Further, if it is 80% by weight or more, in addition to the economical viewpoint, it is possible to suppress the generation of volatile components caused by the rosin resin (C) in the step (II) and suppress the generation of voids inside the fiber bundle.

Further, in the step (II), it is preferred that the maximum temperature of the rosin resin (C) is 150 to 400°C. If the maximum temperature is 150°C or higher, it is more preferably 180°C or higher, and further preferably 200°C or higher. On the other hand, if the maximum temperature is 400°C or lower, undesirable side reactions such as the decomposition reaction of the rosin resin (C) can be suppressed. The temperature is more preferably 380°C or lower, and further preferably 350°C or lower.

The heating method in the step (II) is not particularly limited, but concretely, exemplified are a method using a heated chamber and a method of simultaneously performing heating and pressurization using a hot roller, and the like.

Further, from the viewpoint of suppressing the occurrence of undesirable side reactions such as crosslinking reaction and decomposition reaction of the rosin resin (C), it is preferred to heat in a non-oxidizing atmosphere. Here, the non-oxidizing atmosphere indicates an atmosphere in which the oxygen concentration is 5% by volume or less, preferably 2% by volume or less, and more preferably which does not contain oxygen, namely, an inert gas atmosphere such as nitrogen, helium, or argon. In particular, a nitrogen atmosphere is preferred from the viewpoint of economy and ease of handling.

Furthermore, the bundle of the reinforcing fibers (A) may be opened in advance before the steps (I) and (II). The opening is an operation of splitting a bundle of reinforcing fibers which has been converged, and is expected to have an effect of further enhancing the impregnation property of the rosin resin (C). By the opening, the thickness of the reinforcing fiber bundle becomes thinner, when the width of the reinforcing fiber bundle before opening is referred to as b1 (mm), the thickness is referred to as a1 ($\mu$m), the width of the reinforcing fiber bundle after opening is referred to as b2 (mm), and the thickness is referred to as a2 ($\mu$m), the opening ratio = (b2/a2)/(b1/a1) is preferably 2.0 or more, more preferably 2.5 or more.

The method of opening the reinforcing fiber bundle is not particularly restricted, and for example, can be utilized a method of passing it alternately through concave and convex rolls, a method of using a drum-shaped roll, a method of applying tension fluctuations to axial vibration, a method of fluctuating the tension of the reinforcing fiber bundle using two friction bodies which reciprocate vertically, a method of blowing air onto the reinforcing fiber bundle, and the like.

A molding material can be obtained by coating such a fiber bundle with a thermoplastic resin (B) or a resin composition containing at least a thermoplastic resin (B).

Further, a molding material mixture may also be obtained by dry blending a molding material obtained by coating the fiber bundle produced by the above-described method with the thermoplastic resin (B) and pellets obtained by melt-kneading the thermoplastic resin (B). In this case, the content of the reinforcing fibers (A) in the molded article can be easily adjusted. Further, a molding material mixture may also be obtained by dry blending a molding material obtained by coating the composite comprising carbon fibers and the rosin resin (C) with the thermoplastic resin (B) and a molding material obtained by coating the composite comprising organic fibers or glass fibers and the rosin resin (C) with the thermoplastic resin (B). Here, dry blending is different from melt kneading, it indicates stirring and blending multiple materials at a temperature which does not melt the resin components to create a substantially uniform state, and it is preferably used mainly in cases where a pellet-shaped molding material is used such as injection molding and extrusion molding.

As the molding material mixture, preferred is a mixture containing a carbon fiber-reinforced thermoplastic resin molding material (X) containing at least carbon fibers, the thermoplastic resin (B) and the rosin resin (C) (sometimes referred to as "carbon fiber-reinforced molding material"), and an organic fiber/or glass fiber-reinforced thermoplastic resin molding material (Y) containing at least organic fibers or glass fibers, the thermoplastic resin (B) and the rosin resin (C) (sometimes referred to as "organic fiber/or glass fiber-reinforced molding material"). The carbon fiber-reinforced molding material (X) includes a composite formed by impregnating carbon fibers with the rosin resin (C), and preferably has a configuration in which the thermoplastic resin (B) is contained on the outside of the composite, and it is preferred that the length of the carbon fibers and the length of the carbon fiber-reinforced thermoplastic resin molding material are substantially the same. Further, the organic fiber/or glass fiber-reinforced molding material (Y) includes a composite formed by impregnating the organic fibers/or glass fibers with the rosin resin (C), and preferably has a configuration in which the thermoplastic resin (B) is contained on the outside of the composite. Where, the above-described rosin resins (C) may be the same kind, and the thermoplastic resins (B) may be the same kind.

The composition of the present invention is a fiber-reinforced thermoplastic resin composition excellent in tensile strength, impact strength, and appearance quality, and as use of the molded articles and molding materials comprising the composition of the present invention, they are extremely useful for electrical/electronic equipment, home appliances, housings, automobile parts, parts for sports applications, and the like. As electrical/electronic equipment housings and parts, they are suitable to use for electronic equipment housings of computers, televisions, video players, DVD players, cameras, audio equipment, and the like, and electronic component applications represented by connectors, speakers, microphones, headphones, small-sized motors, computer-related parts, and the like. As home appliances, exemplified are VTR parts, television parts, irons, hair dryers, rice cooker parts, microwave oven parts, audio parts, audio and visual equipment parts such as audio, laser discs (registered trademark), compact discs, and DVDs, lighting parts, refrigerator parts, air conditioner parts, typewriter parts, word processor parts, etc. Further, as optical equipment and precision machinery related parts, exemplified are office computer related parts, telephone related parts, facsimile related parts, copying machine related parts, binoculars, cameras, watches, and the like. As automotive parts and vehicle-related parts, exemplified are door pads, pillars, console boxes, various motor housings, roof rails, fenders, garnishes, bumpers, door panels, roof panels, hood panels, trunk lids, door mirror stays, spoilers, hood louvers, wheel covers, wheel caps, grill apron cover frames, lamp bezels, door handles, door moldings, rear finishers, wipers, etc. Further, the composition of the present invention is also suitable as sporting goods, they are suitably used for golf-related goods such as golf clubs, shafts, grips, and golf balls, racket sports-related goods such as tennis rackets and tennis balls, badminton rackets and their guts and badminton shuttles, body protection products for sports such as masks, helmets, chest plates, elbow pads and knee pads for American football, baseball, softball, or the like, shoe-related goods such as soles of sports shoes, fishing-related goods such as fishing rods, reels or lures, summer sports-related goods such as surfing goods, winter sports-related goods such as skis and snowboards, other indoor and outdoor sports-related goods, etc.

Examples

Hereinafter, the present invention will be explained in more detail showing Examples, but the present invention is not limited to the description of these Examples. First, the evaluation methods of various properties used in these Examples will be explained.

(1) Weight average fiber length:

A test piece cut out from the molded article was placed in a solvent in which the thermoplastic resin (B) used in each of Examples and Comparative Examples was dissolved, and heat treatment was appropriately applied to prepare a solution in which the reinforcing fibers (A) were uniformly dispersed. Thereafter, the solution was filtered using a quantitative filter paper (No. 5C) supplied by Advantech Corporation, and the reinforcing fibers (A) dispersed on the filter paper were observed using an optical microscope (magnification: 50 to 200 times). The fiber lengths of 1,000 randomly selected reinforcing fibers (A) were measured, and the weight average fiber length (Lw) was calculated from the following equation.

$$\text{Average fiber length} = \Sigma(Mi^2 \times Ni)/\Sigma(Mi \times Ni)$$

Mi: fiber length (mm)
Ni: number of fibers with fiber length Mi

(2) Measurement of tensile strength of molded article:

The ISO type dumbbell test piece obtained in each of Examples and Comparative Examples was subjected to a tensile test at a tensile speed of 5 mm/min using a tensile tester Autograph AG-20kNX (supplied by Shimadzu Corporation) in accordance with ISO527 (2012). and the maximum point stress was determined.

(3) Measurement of Charpy impact strength of molded article:

The parallel part of the ISO type dumbbell test piece obtained in each of Examples and Comparative Examples was cut out, and a V-notched Charpy impact test was conducted in accordance with ISO 179 using a C1-4-01 type testing machine supplied by Tokyo Test Instruments Co., Ltd., and the impact strength ($kJ/cm^2$) was calculated.

(4) Measurement of acid value/hydroxyl value of rosin resin (C):

The acid value/hydroxyl value of the sample to be measured was determined in accordance with JIS K 0070.

(5) Measurement of thermal loss of rosin resin (C):

The sample to be measured was determined by thermogravimetric analysis (TGA). Using a platinum sample pan, measurement was performed at a temperature elevation of 10°C/min under a nitrogen atmosphere, and the weight loss rate at 270°C was determined.

(6) Evaluation of appearance of molded article (evaluation of blackness):

For a test piece of 80 mm × 80 mm × 3 mm thick obtained in each of Examples and Comparative Examples, L* was measured on the appearance of the molded article surface using a spectrocolorimeter (SD7000 supplied by Nippon Denshoku Kogyo Co., Ltd.). The measurement was performed three times, and the average value was used for evaluation of each Example and Comparative Example. Determination was performed based on the following criteria, and A and B were determined to be acceptable.

A: L* is less than 18

B: L* is less than 20

C: L* is 20 or more

(7) Evaluation of appearance of molded article (evaluation of fiber dispersibility):

The number of undispersed CF bundles present on each of the front and back surfaces of the falling weight impact strength measurement test piece obtained in each of Examples and Comparative Examples was visually counted. The evaluation was performed on 50 molded articles, and the fiber dispersibility of the total number of molded articles was determined based on the following criteria, and A and B were determined to be acceptable.

A: Less than 1 undispersed CF bundle

B: One or more undispersed CF bundles

C: Two or more undispersed CF bundles

Reference Example 1:

Preparation of carbon fiber (A-1):

A copolymer whose main component was polyacrylonitrile was subjected to spinning, calcination, and surface oxidation to prepare continuous carbon fibers having a total number of single fibers of 24,000, a single fiber diameter of 7 $\mu$m, a mass per unit length of 1.6 g/m, a specific gravity of 1.8 g/cm$^3$ and a surface oxygen ratio [O/C] of 0.2. The continuous carbon fibers had a strand tensile strength of 4,880 MPa and a strand tensile modulus of 225 GPa. Subsequently, a sizing agent mother liquid was prepared by dissolving glycerol polyglycidyl ether as a polyfunctional compound in water so as to achieve a concentration of 2% by weight, and the sizing agent was applied to the carbon fibers by a dipping method, followed by drying at 230°C. The amount of sizing agent attached to the carbon fibers thus obtained was 1.0% by weight.

Production Example 1:

Preparation of rosin resin (C-2):

100 parts of hydrogenated rosin was charged into a reaction apparatus equipped with a stirring device, a cooling tube, and a nitrogen introduction tube, and after heating under a nitrogen stream to completely melt it, 190 parts of bisphenol A type polymeric epoxy resin (epoxy equivalent: 500) was charged while being stirred, 0.1 part of 2-methylimidazole was added at 140°C, and the mixture was reacted at 180°C for 3 hours to prepare rosin resin (C-2) with a hydroxyl value of 150 mg/KOH/g.

Production Example 2:

Preparation of rosin resin (C-3):

100 parts of hydrogenated rosin was charged into a reaction apparatus equipped with a stirring device, a cooling tube, and a nitrogen introduction tube, and after heating under a nitrogen stream to completely melt it, 230 parts of bisphenol A type polymeric epoxy resin (epoxy equivalent: 500) was charged while being stirred, 0.1 part of 2-methylimidazole was added at 140°C, and the mixture was reacted at 180°C for 3 hours to prepare rosin resin (C-3) with a hydroxyl value of 200 mg/KOH/g.

Production Example 3:

Preparation of rosin resin (C-5):

200 parts of disproportionated rosin was charged into a reaction apparatus equipped with a stirring device, a cooling tube, and a nitrogen introduction tube, and after heating under a nitrogen stream to completely melt it, a bisphenol A type polymeric epoxy resin (epoxy equivalent: 180) was charged while being stirred, 0.06 part of 2-methylimidazole was added at 140°C, and the mixture was reacted at 150°C for 5 hours to prepare rosin polyol with a hydroxyl value of 125 mgKOH/g. Thereafter, 112 parts of Chinese gum rosin was charged and reacted at 275°C for 2 hours to prepare rosin resin (C-5) with a hydroxyl value of 43 mg/KOH/g.

Production Example 4:

Preparation of rosin resin (C-6):

200 parts of disproportionated rosin was charged into a reaction apparatus equipped with a stirring device, a cooling tube, and a nitrogen introduction tube, and after heating under a nitrogen stream to completely melt it, a bisphenol A type polymeric epoxy resin (epoxy equivalent: 180) was charged while being stirred, 0.06 part of 2-methylimidazole was added at 140°C, and the mixture was reacted at 150°C for 5 hours to prepare rosin polyol with a hydroxyl value of 125 mgKOH/g. Thereafter, 56 parts of Chinese gum rosin was charged and reacted at 275°C for 2 hours to prepare rosin resin (C-6) with a hydroxyl value of 75 mg/KOH/g.

Organic fiber (A-2):

Liquid crystalline polyester fiber ("Siveras" (registered trademark) 1700T-288f supplied by Toray Industries, Inc., strength: 23.5 cN/dtex, melting point: 330°C, energy propagation velocity: 17.3 km/s) was used.

Glass fiber (A-3):

Glass fiber roving (supplied by Asahi Fiber Co., Ltd., "ER2220", fiber diameter: 16 $\mu$m, amino silane coupling agent, olefin emulsion used, number of filaments: approximately 4,000) was used.

Thermoplastic resin (B):

(B-1):

A polyamide resin (supplied by Toray Industries, Inc., nylon 6 resin "Amilan" (registered trademark) CM1001) was used.

(B-2):

A polyamide resin (supplied by Toray Industries, Inc., nylon 610 resin "Amilan" (registered trademark) CM2001) was used.

(B-3):

A polyamide resin (supplied by Arkema Co., Ltd., nylon 11 resin "Rilsan" (registered trademark) BMN O) was used.

(B-4):

A polyamide resin (supplied by Arkema Co., Ltd., nylon 12 resin "Rilsamid" (registered trademark) AMN O) was used.

(B-5):

A polyamide resin (supplied by Kuraray Co., Ltd., nylon 9T resin "Genestar" (registered trademark) N1000A) was used.

(B-6):

Pellet blend of polypropylene resin ("Prime Polypro" (registered trademark) J137, supplied by Prime Polymer Co., Ltd.) and maleic acid-modified polypropylene resin ("Admer" (registered trademark) QE840, supplied by Mitsui Chemicals, Ltd.) at a weight ratio of 85/15 was used.

(B-7):

A polycarbonate resin (supplied by Teijin Kasei Ltd., "Panlite" (registered trademark) L-1225L) was used.

(B-8):

A polyarylene sulfide resin (supplied by Toray Industries, Inc., PPS resin "TORELINA (registered trademark) M2888") was used.

Thermoplastic resin (Ba):

(Ba-1):

A polyamide resin (supplied by Toray Industries, Inc., nylon 6 resin "Amilan" (registered trademark) CM1001) was used.

(Ba-2):

A polyamide resin (supplied by Arkema Co., Ltd., nylon 12 resin "Rilsamid" (registered trademark) AMN O) was used.

Resin having reactive functional group (Bb):

(Bb-1): Glycidyl methacrylate-modified polyethylene copolymer "Bondfast" (registered trademark) BF-7L (supplied by Sumitomo Chemical Co., Ltd.).
(Bb-2): Glycidyl methacrylate-modified polyethylene copolymer "Bondfast" (registered trademark) BF-7M (supplied by Sumitomo Chemical Co., Ltd.).
(Bb-3): Maleic anhydride-modified ethylene-1-butene copolymer "Tafmer" (registered trademark) MH7020 (supplied by Mitsui Chemicals, Inc.).

Rosin resin (C):

(C-1):

Highly polar rosin: ("Pinecrystal" (registered trademark) D-6011 supplied by Arakawa Chemical Industry Co., Ltd., hydroxyl value: 100 mg KOH/g, thermal loss at 270°C: 1.8%) was used.

(C-2):

Rosin resin (C-2) obtained in Production Example 1 (thermal loss at 270°C: 1.4%) was used.

(C-3):

Rosin resin (C-3) obtained in Production Example 2 (thermal loss at 270°C: 0.8%) was used.

(C-4):

Acid modified rosin: ("Pinecrystal" (registered trademark) KE604 supplied by Arakawa Chemical Industry Co., Ltd., acid value: 230 mgKOH/g, thermal loss at 270°C: 9.6%) was used.

(C-5):

Rosin resin (C-5) obtained in Production Example 3 (thermal loss at 270°C: 1.6%) was used.

(C-6):

Rosin resin (C-6) obtained in Production Example 4 (thermal loss at 270°C: 2.2%) was used.

Resin (D) used in Comparative Example]

(D-1):

Terpene phenol resin (supplied by Yasuhara Chemical Co., Ltd., "YS Polystar N125 (trade name)", hydroxyl value: 160 mgKOH/g, thermal loss at 270°C: 6.2%) was used.

(D-2):

Terpene-based resin (supplied by Yasuhara Chemical Co., Ltd., "Clearon M105 (trade name)", acid value: 0mgKOH/g, thermal loss at 270°C: 7.5%) was used.

(D-3):

A petroleum resin (supplied by Idemitsu Kosan Co., Ltd., "Imarv P-100 (trade name)", hydroxyl value and acid value: both less than 1 mgKOH/g, thermal loss at 270°C: 7.0%) was used.

(Example 1)

Using a long fiber reinforced resin pellet manufacturing device equipped with a coating die for electric wire coating method installed at the tip of a TEX-30α type twin screw extruder (screw diameter 30 mm, L/D = 32) supplied by Japan Steel Works, Ltd., the extruder cylinder temperature was set at 260°C, the thermoplastic resin (B-1) shown above was supplied from the main hopper, and melt-kneading was performed at a screw rotational speed of 200 rpm. The discharge amount of rosin resin (C-1) heated and melted at 200°C was adjusted to 4 parts by weight relative to the total of 100 parts by weight of (A) to (C), and after applying it to the fiber bundle comprising carbon fibers (A-1), it was supplied to the die port (diameter: 3 mm) discharging the molten thermoplastic resin (B-1) to continuously coat around the carbon fibers (A-1). At this time, in the internal cross section of the fiber bundle, at least a part of the carbon fibers (A-1) were in contact with the thermoplastic resin (B-1). After cooling the obtained strand, it was cut into pellets with a length of 7 mm using a cutter to prepare long fiber pellets. At this time, the take-up speed was adjusted so that the amount of carbon fibers (A-1) was 20 parts by weight relative to the total of 100 parts by weight of (A) to (C). The length of the carbon fibers (A-1) of the obtained long fiber pellets and the pellet length were substantially the same.
By injection molding the long fiber pellets thus prepared at conditions of injection time: 2 seconds, back pressure 5 MPa, holding pressure: 40 MPa, holding pressure time: 10 seconds, cylinder temperature: 260°C and mold temperature: 60°C using an injection molding machine (J110AD supplied by Japan Steel Works, Ltd.), an ISO type dumbbell test piece as a molded article, and a test piece for color tone evaluation and dispersibility evaluation of 80 mm × 80 mm × 3 mm thickness were prepared. Here, the cylinder temperature indicates a temperature of the portion of the injection molding machine which heats and melts the molding material, and the mold temperature indicates a temperature of the mold into which the resin is injected to form a predetermined shape. The obtained test piece (molded article) was placed for 24 hours in a constant temperature and humidity chamber adjusted to a temperature of 23°C and 50 %RH, and then subjected to property evaluation. Evaluation results evaluated by the aforementioned methods are summarized and shown in Table 1.

(Examples 2 to 9)

A molded article was prepared and evaluated in the same manner as in Example 1, except that the composition ratio or the kind of rosin resin used was changed as shown in Table 1. The evaluation results are summarized and shown in Table 1.

(Examples 10 to 18)

A molded article was prepared and evaluated in the same manner as in Example 1, except that the composition ratio, the kind of resin used, and the kind of rosin resin were changed as shown in Tables 1 and 2, and the cylinder temperature was set at 230°C. The evaluation results are summarized and shown in Tables 1 and 2.

(Example 19)

A molded article was prepared and evaluated in the same manner as in Example 1, except that the molding back pressure during injection molding was changed to 20 MPa. The evaluation results are summarized and shown in Table 2.

(Example 20)

A molded article was prepared and evaluated in the same manner as in Example 1, except that the molding back pressure during injection molding was changed to 15 MPa. The evaluation results are summarized and shown in Table 2.

(Example 21)

A molded article was prepared and evaluated in the same manner as in Example 1, except that the molding back pressure during injection molding was changed to 3 MPa. The evaluation results are summarized and shown in Table 2.

(Example 22)

A molded article was prepared and evaluated in the same manner as in Example 1, except that the molding back pressure during injection molding was changed to 1 MPa. The evaluation results are summarized and shown in Table 2.

(Examples 23, 24)

Using a long fiber reinforced resin pellet manufacturing device equipped with a coating die for electric wire coating method installed at the tip of a TEX-30α type twin screw extruder (screw diameter 30 mm, L/D = 32) supplied by Japan Steel Works, Ltd., the extruder cylinder temperature was set at 260°C, the thermoplastic resin (B-1) shown above was supplied from the main hopper, and melt-kneading was performed at a screw rotational speed of 200 rpm. The discharge amount of rosin resin (C-2) heated and melted at 200°C was adjusted to 4 parts by weight relative to the total of 100 parts by weight of (A) to (C), and after applying it to the fiber bundle comprising carbon fibers (A-1), it was supplied to the die port (diameter: 3 mm) discharging the molten thermoplastic resin (B-1) to continuously coat around the carbon fibers (A-1) and the organic fibers (A-2). At this time, in the internal cross section of the composite fiber bundle (E), at least a part of the carbon fibers (A-1) and the organic fibers (A-2) were unevenly distributed. In the unevenly distributed state, at least a part of the carbon fibers (A-1) and the organic fibers (A-2) were in contact with the thermoplastic resin (B-1). After cooling the obtained strand, it was cut into pellets with a length of 7 mm using a cutter to prepare long fiber pellets. At this time, the take-up speed was adjusted so that the amount of carbon fibers (A-1) was 20 parts by weight relative to the total of 100 parts by weight of (A) to (C). The lengths of the carbon fibers (A-1) and the organic fibers (A-2) of the obtained long fiber pellets were substantially the same as the length of the pellets. A molded article was prepared and evaluated in the same manner as in Example 1, except that long fiber pellets were used. The evaluation results are summarized and shown in Table 2.

(Examples 25, 26)

A molded article was prepared and evaluated in the same manner as in Example 23, except that the composition ratio or the fiber kind used was changed as shown in Table 3. The evaluation results are summarized and shown in Table 3.

(Examples 27, 34)

A molded article was prepared and evaluated in the same manner as in Example 1, except that the composition ratio, the resin kind used, and the rosin resin kind were changed as shown in Table 3, and the cylinder temperature was set at 240°C. The evaluation results are summarized and shown in Table 3.

(Examples 28, 35)

A molded article was prepared and evaluated in the same manner as in Example 1, except that the composition ratio, the resin kind used, and the rosin resin kind were changed as shown in Table 3, and the cylinder temperature was set at 270°C and the mold temperature was set at 80°C. The evaluation results are summarized and shown in Table 3.

(Example 29)

A molded article was prepared and evaluated in the same manner as in Example 1, except that the composition ratio, the resin kind used, and the rosin resin kind were changed as shown in Table 3, and the cylinder temperature was set at 330°C and the mold temperature was set at 140°C. The evaluation results are summarized and shown in Table 3.

(Example 30)

A molded article was prepared and evaluated in the same manner as in Example 1, except that the composition ratio, the resin kind used, and the rosin resin kind were changed as shown in Table 3, and the cylinder temperature was set at 280°C and the mold temperature was set at 100°C. The evaluation results are summarized and shown in Table 3.

(Example 31)

A molded article was prepared and evaluated in the same manner as in Example 1, except that the composition ratio, the resin kind used, and the rosin resin kind were changed as shown in Table 3, and the cylinder temperature was set at 200°C. The evaluation results are summarized and shown in Table 3.

(Example 32)

A molded article was prepared and evaluated in the same manner as in Example 1, except that the composition ratio, the resin kind used, and the rosin resin kind were changed as shown in Table 3, and the cylinder temperature was set at 320°C and the mold temperature was set at 130°C. The evaluation results are summarized and shown in Table 3.

(Example 33)

A molded article was prepared and evaluated in the same manner as in Example 1, except that the composition ratio and the rosin resin kind used were changed as shown in Table 3. The evaluation results are summarized and shown in Table 3.

(Example 36)

A molded article was prepared and evaluated in the same manner as in Example 10, except that the composition ratio, the resin kind used, and the rosin resin kind were changed as shown in Table 3. The evaluation results are summarized and shown in Table 3.

(Example 37)

Using a long fiber reinforced resin pellet manufacturing device equipped with a coating die for electric wire coating method installed at the tip of a TEX-30α type twin screw extruder (screw diameter 30 mm, L/D = 32) supplied by Japan Steel Works, Ltd., the extruder cylinder temperature was set at 270°C, the thermoplastic resin (Ba-1) and the resin having a reactive functional group (Bb-1) shown above were supplied from the main hopper, and melt-kneading was performed at a screw rotational speed of 200 rpm. The discharge amount of rosin resin (C-1) heated and melted at 200°C was adjusted to 4 parts by weight relative to the total of 100 parts by weight of (A) to (C), and after applying it to the fiber bundle comprising carbon fibers (A-1), it was supplied to the die port (diameter: 3 mm) discharging the molten thermoplastic resin (Ba-1) and the resin having a reactive functional group (Bb-1) to continuously coat around the carbon fibers (A-1). At this time, in the internal cross section of the fiber bundle, at least a part of the carbon fibers (A-1) were in contact with the thermoplastic resin (Ba-1) and the resin having a reactive functional group (Bb-1). After cooling the obtained strand, it was cut into pellets with a length of 7 mm using a cutter to prepare long fiber pellets. At this time, the take-up speed was adjusted so that the amount of carbon fibers (A-1) was 20 parts by weight relative to the total of 100 parts by weight of (A) to (C). The length of the carbon fibers (A-1) of the obtained long fiber pellets and the pellet length were substantially the same.

By injection molding the long fiber pellets thus prepared at conditions of injection time: 2 seconds, back pressure 5 MPa, holding pressure: 40 MPa, holding pressure time: 10 seconds, cylinder temperature: 270°C and mold temperature: 80°C using an injection molding machine (J110AD supplied by Japan Steel Works, Ltd.), an ISO type dumbbell test piece as a molded article, and a test piece for color tone evaluation and dispersibility evaluation of 80 mm × 80 mm × 3 mm thickness were prepared. Here, the cylinder temperature indicates a temperature of the portion of the injection molding machine which heats and melts the molding material, and the mold temperature indicates a temperature of the mold into which the resin is injected to form a predetermined shape. The obtained test piece (molded article) was placed for 24 hours in a constant temperature and humidity chamber adjusted to a temperature of 23°C and 50 %RH, and then subjected to property evaluation. Evaluation results evaluated by the aforementioned methods are summarized and shown in Table 4.

(Examples 38 to 47, 49, 50 and 59)

A molded article was prepared and evaluated in the same manner as in Example 37, except that the composition ratio or the resin kind and rosin resin kind used were changed as shown in Tables 4 and 5. The evaluation results are summarized and shown in Tables 4 and 5.

(Example 48)

A molded article was prepared and evaluated in the same manner as in Example 37, except that the composition ratio, the resin kind used, and the rosin resin kind were changed as shown in Table 4, and the cylinder temperature was set at 230°C and the mold temperature was set at 60°C. The evaluation results are summarized and shown in Table 4.

(Example 55)

A molded article was prepared and evaluated in the same manner as in Example 1, except that the molding back pressure during injection molding was changed to 20 MPa. The evaluation results are summarized and shown in Table 5.

(Example 56)

A molded article was prepared and evaluated in the same manner as in Example 37, except that the molding back pressure during injection molding was changed to 15 MPa. The evaluation results are summarized and shown in Table 5.

(Example 57)

A molded article was prepared and evaluated in the same manner as in Example 37, except that the molding back pressure during injection molding was changed to 3 MPa. The evaluation results are summarized and shown in Table 5.

(Example 58)

A molded article was prepared and evaluated in the same manner as in Example 37, except that the molding back pressure during injection molding was changed to 1 MPa. The evaluation results are summarized and shown in Table 5.

(Examples 51, 52)

Using a long fiber reinforced resin pellet manufacturing device equipped with a coating die for electric wire coating method installed at the tip of a TEX-30α type twin screw extruder (screw diameter 30 mm, L/D = 32) supplied by Japan Steel Works, Ltd., the extruder cylinder temperature was set at 270°C, the thermoplastic resin (Ba-1) and the resin having a reactive functional group (Bb-1) shown above were supplied from the main hopper, and melt-kneading was performed at a screw rotational speed of 200 rpm. The discharge amount of rosin resin (C-2) heated and melted at 200°C was adjusted to 4 parts by weight relative to the total of 100 parts by weight of (A) to (C), and after applying it to the fiber bundle comprising carbon fibers (A-1), it was supplied to the die port (diameter: 3 mm) discharging the molten thermoplastic resin (B-1) to continuously coat around the carbon fibers (A-1) and the organic fibers (A-2). At this time, in the internal cross section of the composite fiber bundle (E), at least a part of the carbon fibers (A-1) and the organic fibers (A-2) were unevenly distributed. In the unevenly distributed state, at least a part of the carbon fibers (A-1) and the organic fibers (A-2) were in contact with the thermoplastic resin (Ba-1) and the resin having a reactive functional group (Bb-1). After cooling the obtained strand, it was cut into pellets with a length of 7 mm using a cutter to prepare long fiber pellets. At this time, the take-up speed was adjusted so that the amount of carbon fibers (A-1) was 20 parts by weight relative to the total of 100 parts by weight of (A) to (C). The lengths of the carbon fibers (A-1) and the organic fibers (A-2) of the obtained long fiber pellets were substantially the same as the length of the pellets. A molded article was prepared and evaluated in the same manner as in Example 37, except that long fiber pellets were used. The evaluation results are summarized and shown in Table 5.

(Examples 53, 54 and 60)

A molded article was prepared and evaluated in the same manner as in Example 51, except that the composition ratio or the fiber kind and rosin resin kind used were changed as shown in Table 5. The evaluation results are summarized and shown in Table 5.

(Comparative Examples 1 to 9)

A molded article was prepared and evaluated in the same manner as in Example 1, except that the composition ratio or the rosin resin kind used was changed as shown in Table 6. The evaluation results are summarized and shown in Table 6.

(Comparative Example 10)

A molded article was prepared and evaluated in the same manner as in Example 1, except that the molding back pressure during injection molding was changed to 40 MPa. The evaluation results are shown in Table 6.

(Comparative Example 11)

A molded article was prepared and evaluated in the same manner as in Example 4, except that the pellet length was changed to 14 mm. The evaluation results are shown in Table 6.

All of the materials of Examples 1 to 9 had excellent dispersibility, and exhibited high tensile strength, impact strength, and excellent appearance quality, especially blackness. The materials of Examples 10 to 18 and 27 to 36 in which the resin kind and rosin resin kind were changed also showed excellent dispersibility, high tensile strength, impact strength, and excellent appearance quality, especially blackness. Even when the fiber length in the molded article was changed in Examples 19 to 22, similarly excellent effects were exhibited. Also in Examples 23 to 26 containing organic fibers (A-2) or glass fibers (A-3), similarly excellent effects were exhibited and further, an effect excellent in impact strength was shown.

All of the materials of Examples 37 to 45 had excellent dispersibility, and exhibited high mechanical strength, especially impact strength, and excellent appearance quality, especially blackness. The materials of Examples 46 to 50 and Example 59 in which the resin kind and rosin resin kind were changed also showed excellent dispersibility, high mechanical strength, especially impact strength, and excellent appearance quality, especially blackness. Also in Examples 55 to 58 in which the fiber lengths in the molded articles were changed, similarly excellent effects were exhibited. Also in Examples 51 to 54 and 60 containing organic fibers (A-2) or glass fibers (A-3), similarly excellent effects were exhibited and further, an effect excellent in impact strength was shown.

On the other hand, in Comparative Examples 1 to 3, since a rosin resin was not contained, an entanglement of fibers occurred, the dispersibility was insufficient, and the tensile strength, impact strength, and appearance quality, especially blackness, were inferior. In Comparative Examples 4 and 5, because the hydroxyl value of the rosin resin was low, an entanglement of fibers occurred, the dispersibility was insufficient, and the tensile strength, impact strength, and appearance quality, especially blackness, were inferior.

In Comparative Example 6, since there were few reinforcing fibers, the fiber reinforcing effect was weak, and the tensile strength and impact strength were inferior. In Comparative Example 7, since the reinforcing fibers were contained excessively, the reinforcing fibers entangled with each other and fiber breakage occurred within the molded article, resulting in insufficient dispersibility and poor impact strength. In Comparative Example 8, since the amount of the rosin resin relative to the reinforcing fibers was small, the wettability between the reinforcing fibers and the thermoplastic resin was insufficient, and the tensile strength, impact strength, and appearance quality, especially blackness, were inferior. In Comparative Example 9, since the amount of the rosin resin was excessive, the strength and toughness of the thermoplastic resin were reduced, and the tensile strength and impact strength of the molded article were inferior. In Comparative Example 10, since the fiber length of the reinforcing fibers was short, the fiber reinforcing effect was weak, and the tensile strength and impact strength were inferior. In Comparative Example 11, since the pellet length, that is, the fiber length became too long, the dispersibility was insufficient, and the appearance quality, especially blackness, was inferior.

[Table 1]

| | | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|
| Raw material | Reinforcing fiber (A) | | Content | Part by weight | 20.0 | 5.0 | 10.0 | 20.0 | 30.0 | 50.0 | 20.0 | 20.0 | 20.0 | 5.0 | 10.0 | 20.0 |
| | | | Fiber kind | | A1 | A1 | A1 | A1 | A1 | A1 | A1 | A1 | A1 | A1 | A1 | A1 - |
| | | | Content of (A1) relative to the total of 100 parts by weight of (A1) and (A2) or (A3) | Part by weight | 100.0 | 100.0 | 100.0 | 100.0 | 100.0 | 100.0 | 100.0 | 100.0 | 100.0 | 100.0 | 100.0 | 100.0 |
| | | | Content of (A2) relative to the total of 100 parts by weight of (A1) and (A2) or (A3) | Part by weight | - | - | - | - | - | - | - | - | - | - | - | - |
| | | | Content of (A3) relative to the total of 100 parts by weight of (A1) and (A2) or (A3) | Part by weight | - | - | - | - | - | - | - | - | - | - | - | - |
| | Thermoplastic resin (B) | | Kind | - | B-1 | B-1 | B-1 | B-1 | B-1 | B-1 | B-1 | B-1 | B-1 | B-4 | B-4 | B-4 |
| | | | Content | Part by weight | 76.0 | 94.0 | 88.0 | 76.0 | 64.0 | 40.0 | 76.0 | 79.8 | 70.0 | 94.0 | 88.0 | 76.0 |

| | | | | Example 1 | Example 2 | Example 3 | Example 4 | Example 5 | Example 6 | Example 7 | Example 8 | Example 9 | Example 10 | Example 11 | Example 12 |
|---|---|---|---|---|---|---|---|---|---|---|---|---|---|---|---|
| | Rosin resin (C) | Kind | - | C-1 | C-2 | C-2 | C-2 | C-2 | C-2 | C-3 | C-3 | C-3 | C-3 | C-3 | C-3 |
| | | Acid value or hydroxyl value | mgKOH/g | 100.0 | 150.0 | 150.0 | 150.0 | 150.0 | 150.0 | 200.0 | 150.0 | 150.0 | 200.0 | 200.0 | 200.0 |
| | | Thermal loss at 270°C of rosin resin (C) | % | A | A | A | A | A | A | A | A | A | A | A | |
| | | Content | Part by weight | 4.0 | 1.0 | 2.0 | 4.0 | 6.0 | 10.0 | 4.0 | 0.2 | 10.0 | 1.0 | 2.0 | 4.0 |
| | | Content of rosin resin (C) relative to Reinforcing fibers (A) | % | 20.0 | 20.0 | 20.0 | 20.0 | 20.0 | 20.0 | 20.U | 1.0 | 50.0 | 20.0 | 20.0 | 20.0 |
| Molded article | Average fiber length | $Lw_{a1}$ | mm | 1.2 | 1.7 | 1.5 | 1.2 | 1.0 | 0.4 | 1.2 | 1.0 | 1.3 | 1.2 | 1.2 | 1.2 |
| | | $Lw_{a2}$ | mm | - | - | - | - | - | - | - | - | - | - | - | - |
| | | $Lw_{a1}$ | mm | - | - | - | - | | - | - | - | - | - | - | - |
| Evaluation result | Mechanical property | Charpy impact strength | kJ/m$^2$ | 15.0 | 9.0 | 11.0 | 17.0 | 21.0 | 25.0 | 14.0 | 12.0 | 15.0 | 12.0 | 15.0 | 16.0 |
| | | Tensile strength | MPa | 240.0 | 160.0 | 220.0 | 270.0 | 290.0 | 300.0 | 250.0 | 220.0 | 250.0 | 155.D | 170.0 | 200.0 |
| | | Flexural modulus | GPa | 15.0 | 5.0 | 10.0 | 15.0 | 20.0 | 35.0 | 15.0 | 15.0 | 15.0 | 4.0 | 10.0 | 13.0 |
| | Appearance quality | Dispersibility | - | A | A | A | A | A | B | A | B | A | A | A | A |
| | | Blackness | - | A | A | A | A | A | B | A | B | A | A | A | A |

EP 4 414 415 A1

35

[Table 2]

| | | | | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|---|
| Raw material | Reinforcing fiber (A) | Content | Part by weight | 30.0 | 5.0 | 10.0 | 20.0 | 30.0 | 20.0 | 20.0 | 20.0 | 20.0 | 20.0 | 25.0 | 15.0 |
| | | Fiber kind | - | A-1 | A-1 | A-1 | A-1 | A-1 | A-1 | A-1 | A-1 | A-1 | A-1 | A-1/A-2 | A-1/A-2 |
| | | Content of (A1) relative to the total of 100 parts by weight of (A1) and (A2) or (A3) | Part by weight | 100.0 | 100.0 | 100.0 | 100.0 | 100.0 | 100.0 | 100.0 | 100.0 | 100.0 | 100.0 | 80.0 | 70.0 |
| | | Content of (A2) relative to the total of 100 parts by weight of (A1) and (A2) or (A3) | Part by weight | - | - | - | - | - | - | - | - | - | - | 20.0 | 30.0 |
| | | Content of (A3) relative to the total of 100 parts by weight of (A1) and (A2) or (A3) | Part by weight | - | - | - | - | - | - | - | - | - | - | - | - |
| | Thermoplastic resin (B) | Kind | - | B-4 | B-4 | B-4 | B-4 | B-4 | B-4 | B-1 | B-1 | B-1 | B-1 | B-1 | B-1 |
| | | Content | Part by weight | 64.0 | 94.0 | 88.0 | 76.0 | 64.0 | 76.0 | 76.0 | 76.0 | 76.0 | 76.0 | 70.0 | 82.0 |

| | | | | Example 13 | Example 14 | Example 15 | Example 16 | Example 17 | Example 18 | Example 19 | Example 20 | Example 21 | Example 22 | Example 23 | Example 24 |
|---|---|---|---|---|---|---|---|---|---|---|---|---|---|---|---|
| | Rosin resin (C) | Kind | - | C-3 | C-2 | C-2 | C-2 | C-2 | C-2 | C-2 | C-2 | C-2 | C-2 | C-2 | C-2 |
| | | Acid value or hydroxyl value | mgKOH/g | 200.0 | 150.0 | 150.0 | 150.0 | 150.0 | 200.0 | 150.0 | 150.0 | 150.0 | 150.0 | 150.0 | 150.0 |
| | | Thermal loss at 270°C of rosin resin (C) | | A | A | A | A | A | A | A | A | A | A | A | A |
| | | Content | Part by weight | 6.0 | 1.0 | 2.0 | 4.0 | 6.0 | 4.0 | 4.0 | 4.0 | 4.0 | 4.0 | 5.0 | 3.0 |
| | | Content of rosin resin (C) relative to Reinforcing fibers (A) | % | 20.0 | 20.0 | 20.0 | 20.0 | 20.0 | 20.0 | 20.0 | 20.0 | 20.0 | 20.0 | 20.0 | 20.0 |
| Molded article | Average fiber length | $Lw_{a1}$ | mm | 1.0 | 1.7 | 1.5 | 1.2 | 1.0 | 1.2 | 0.1 | 2.5 | 4.0 | 7.0 | 1.2 | 1.4 |
| | | $Lw_{a1}$ | mm | - | - | - | - | - | - | - | - | - | - | 5.5 | 6.0 |
| | | $Lw_{a3}$ | mm | - | - | - | - | - | - | - | - | - | - | - | - |
| Evaluation result | Mechanical property | Charpy impact strength | kJ/m² | 18.0 | 13.0 | 15.0 | 17.0 | 19.0 | 14.0 | 10.0 | 18.0 | 21.0 | 30.0 | 27.0 | 20.0 |
| | | Tensile strength | MPa | 245.0 | 160.0 | 180.0 | 210.0 | 250.0 | 190.0 | 180.0 | 270.0 | 275.0 | 280.0 | 230.0 | 190.0 |
| | | Flexural modulus | GPa | 19.0 | 40 | 10.0 | 14.0 | 19.0 | 14.0 | 13.0 | 15.0 | 15.0 | 17.0 | 14.0 | 9.0 |
| | Appearance quality | Dispersibility | - | A | A | A | A | A | A | A | A | A | A | A | A |
| | | Blackness | - | A | A | A | A | A | A | A | A | A | A | A | A |

[Table 3]

| | | | Example 25 | Example 26 | Example 27 | Example 28 | Example 29 | Example 30 | Example 31 | Example 32 | Example 33 | Example 34 | Example 35 | Example 36 |
|---|---|---|---|---|---|---|---|---|---|---|---|---|---|---|
| Raw material | Reinforcing fiber (A) | Content | Part by weight | 25.0 | 15.0 | 20.0 | 20.0 | 20.0 | 20.0 | 20.0 | 20.0 | 20.0 | 20.0 | 200 | 20.0 |
| | | Fiber kind | | A-1/A-3 | A-1/A-3 | A-1 | A-1 | A-1 | A-1 | A-1 | A-1 | A-1 | A-1 | A-1 | A-1 |
| | | Content of (A1) relative to the total of 100 parts by weight of (A1) and (A2) or (A3) | Part by weight | 80.0 | 70.0 | 100.0 | 100.0 | 100.0 | 100.0 | 100.0 | 100.0 | 100.0 | 100.0 | 100.0 | 100.0 |
| | | Content of (A2) relative to the total of 100 parts by weight of (A1) and (A2) or (A3) | Part by weight | - | - | - | - | - | - | - | - | - | - | - | - |
| | | Content of (A3) relative to the total of 100 parts by weight of (A1) and (A2) or (A3) | Part by weight | 20.0 | 300 | - | - | - | - | - | - | - | - | - | - |
| | Thermoplastic resin (B) | Kind | - | B-1 | B-1 | B-2 | B-3 | B-5 | B-6 | B-7 | β-8 | B-1 | B-2 | B-3 | B-4 |
| | | Content | Part by weight | 71.0 | 81.0 | 76.0 | 76.0 | 76.0 | 76.0 | 76.0 | 76.0 | 76.0 | 76.0 | 76.0 | 76.0 |

(continued)

| | | | | Example 25 | Example 26 | Example 27 | Example 28 | Example 29 | Example 30 | Example 31 | Example 32 | Example 33 | Example 34 | Example 35 | Example 36 |
|---|---|---|---|---|---|---|---|---|---|---|---|---|---|---|---|
| | Rosin resin (C) | Kind | - | C-2 | C-2 | C-2 | C-2 | C-2 | C-2 | C-2 | C-2 | C-4 | C-4 | C-4 | C-4 |
| | | Acid value or hydroxyl value | mgKOH/g | 150.0 | 150.0 | 150.0 | 150.0 | 150.0 | 150.0 | 150.0 | 150.0 | 230.0 | 230.0 | 230.0 | 230.0 |
| | | Thermal loss at 270°C of rosin resin (C) | % | A | A | A | A | | A | A | A | B | B | B | B |
| | | Content | Part by weight | 5.0 | 3.0 | 4.0 | 4.0 | 4.0 | 4.0 | 4.0 | 4.0 | 4.0 | 4.0 | 4.0 | 4.0 |
| | | Content of rosin resin (C) relative to Reinforcing fibers (A) | % | 20.0 | 20.0 | 20.0 | 20.0 | 20.0 | 20.0 | 20.0 | 20.0 | 20.0 | 20.0 | 20.0 | 20.0 |
| Molded article | Average fiber length | $Lw_{a1}$ | mm | 1.2 | 1.4 | 1.0 | 1.1 | 1.0 | 1.4 | 1.3 | 0.8 | 1.3 | 1.2 | 1.2 | 1.2 |
| | | $Lw_{a2}$ | mm | - | - | - | - | - | - | - | - | - | - | - | - |
| | | $Lw_{a1}$ | mm | 2.0 | 2.5 | - | - | - | - | - | - | - | - | - | - |
| Evaluation result | Mechanical property | Charpy impact strength | kJ/m² | 22.0 | 15.0 | 18.0 | 25.0 | 15.0 | 10.0 | 15.0 | 12.0 | 13.0 | 16.0 | 20.0 | 14.0 |
| | | Tensile strength | MPa | 240.0 | 200.0 | 220.0 | 200.0 | 320.0 | 160.0 | 190.0 | 245.0 | 250.0 | 240.0 | 230.0 | 220.0 |
| | | Flexural modulus | GPa | 16.0 | 11.0 | 16.0 | 15.0 | 22.0 | 11.0 | 16.0 | 17.0 | 15.0 | 16.0 | 14.0 | 14.0 |
| | Appearance quality | Dispersibility | - | A | A | A | A | A | B | A | A | B | B | B | B |
| | | Blackness | - | A | A | A | A | A | B | A | A | B | B | B | B |

[Table 4]

| Raw material | | | | | Example 37 | Example 38 | Example 39 | Example 40 | Example 41 | Example 42 | Example 43 | Example 44 | Example 45 | Example 46 | Example 47 | Example 48 |
|---|---|---|---|---|---|---|---|---|---|---|---|---|---|---|---|---|
| | Reinforcing fiber (A) | | Content | Part by weight | 20.0 | 5.0 | 10.0 | 20.0 | 30.0 | 5.0 | 10.0 | 20.0 | 30.0 | 20.0 | 20.0 | 20.0 |
| | | | Fiber kind | - | A1 | A1 | A1 | A1 | A1 | A1 | A1 | A1 | A1 | A1 | A1 | A1 |
| | | | Content of (A1) relative to the total of 100 parts by weight of (A1) and (A2) or (A3) | Part by weight | 100.0 | 100.0 | 100.0 | 100.0 | 100.0 | 100.0 | 100.0 | 100.0 | 100.0 | 100.0 | 100.0 | 100.0 |
| | | | Content of (A2) relative to the total of 100 parts by weight of (A1) and (A2) or (A)) | Part by weight | - | - | - | - | - | - | - | - | - | - | - | - |
| | | | Content of (A3) relative to the total of 100 parts by weight of (A l) and (A2) or (A3) | Part by weight | - | - | - | - | - | - | - | - | - | - | - | - |
| | Melt-kneaded resin composition (B1) | | (Ba)kind | - | Ba-1 | Ba-1 | Ba-1 | Ba-1 | Ba-1 | Ba-1 | Ba-1 | Ba-1 | Ba-1 | Ba-1 | Ba-1 | Ba-2 |
| | | | (Bb)kind | - | Bb-1 | Bb-1 | Bb-1 | Bb-1 | Bb-1 | Bb-1 | Bb-1 | Bb-1 | Bb-1 | Bb-2 | Bb-3 | Bb-1 |
| | | | Content | Part by weight Part by weight | 76.0 | 94.0 | 88.0 | 76.0 | 64.0 | 94.0 | 88.0 | 76.0 | 64.0 | 76.0 | 76.0 | 76.0 |

| | | | | Example 37 | Example 38 | Example 39 | Example 40 | Example 41 | Example 42 | Example 43 | Example 44 | Example 45 | Example 46 | Example 47 | Example 48 |
|---|---|---|---|---|---|---|---|---|---|---|---|---|---|---|---|
| | Rosin resin (C) | Kind | - | C-1 | C-2 | C-2 | C-2 | C-2 | C-3 | C-3 | C-3 | C-3 | C-2 | C-2 | C-2 |
| | | Acid value or hydroxyl value | mgKOH/g | 100.0 | 150.0 | 150.0 | 150.0 | 150.0 | 200.0 | 200.0 | 200.0 | 200.0 | 150.0 | 150.0 | 150.0 |
| | | Thermal loss at 270°C of rosin resin (C) | % | A | A | A | A | A | A | A | A | A | A | A | A |
| | | Content | Part by weight | 4.0 | 1.0 | 2.0 | 4.0 | 6.0 | 1.0 | 2.0 | 4.0 | 6.0 | 4.0 | 4.0 | 4.0 |
| | | Content of rosin resin (C) relative to Reinforcing fibers (A) | % | 20.0 | 20.0 | 20.0 | 20.0 | 20.0 | 20.0 | 20.0 | 20.0 | 20.0 | 20.0 | 20.0 | 200 |
| Molded article | Average fiber length | $Lw_{a1}$ | mm | 1.0 | 1.5 | 1.2 | 1.0 | 0.8 | 1.5 | 1.2 | 1.0 | 0.8 | 0.9 | 1.0 | 1.1 |
| | | $Lw_{a2}$ | mm | - | - | - | - | - | - | - | - | - | - | - | - |
| | | $Lw_{a1}$ | mm | - | - | - | - | - | - | - | - | - | - | - | - |
| | Morphology | Particle diameter of (Bb) is 10 to 1.000 nm. | - | O | O | O | O | O | O | O | O | O | O | O | O |
| | | Particle diameter of (Bc) is 1 to 100 nm. | - | O | O | O | O | O | O | O | O | O | O | O | O |
| | | Area ratio of (Bc) in (Bb) is 20% or more. | - | O | O | O | O | O | O | O | O | O | O | O | O |

EP 4 414 415 A1

(continued)

| | | | Example 37 | Example 38 | Example 39 | Example 40 | Example 41 | Example 42 | Example 43 | Example 44 | Example 45 | Example 46 | Example 47 | Example 48 |
|---|---|---|---|---|---|---|---|---|---|---|---|---|---|---|
| Evaluation result | Mechanical property | Charpy impact strength | kJ/m² | 22.0 | 14.0 | 16.0 | 25.0 | 31.0 | 12.0 | 15.0 | 21.0 | 25.0 | 23.0 | 24.0 | 240 |
| | | Tensile strength | MPa | 190.0 | 130.0 | 175.0 | 215.0 | 230.0 | 100.0 | 140.0 | 200.0 | 185.0 | 205.0 | 200.0 | 200.0 |
| | | Flexural modulus | GPa | 12.0 | 4.0 | 8.0 | 12.0 | 16.0 | 3.0 | 7.0 | 12.0 | 13.0 | 12.0 | 12.0 | 13.0 |
| | Appearance quality | Dispersibility | - | A | A | A | A | A | A | A | A | A | A | A | A |
| | | Blackness | mm | A | A | A | A | A | A | A | A | A | A | A | A |

[Table 5]

| | | | | Example 49 | Example 50 | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|---|---|
| Raw mate-rial | Reinforcing fiber (A) | Content | Part by weight | 20.0 | 20.0 | 25.0 | 15.0 | 25.0 | 15.0 | 20.0 | 20.0 | 20.0 | 20.0 | 20.0 | 25.0 |
| | | Fiber kind | - | A1 | A1 | A1/A2 | - | A1/A3 | A1/A3 | A1 | A1 | A1 | A1 | A1 | A1/A2 |
| | | Content of (A1) relative to the total of 100 parts by weight of (A1) and (A2) or (A3) | Part by weight | 100.0 | 100.0 | 80.0 | 70.0 | 80.0 | 70.0 | 100.0 | 100.0 | 100.0 | 100.0 | 100.0 | 80.0 |
| | | C Content of (A2) relative to the total of 1 00 parts by weight of (A1) and (A2) or (A3) | Part by weight | - | - | 20.0 | 30.0 | - | - | - | - | - | - | - | 20.0 |
| | | Content of (A3) relative to the total of 100 parts by weight of (A1) and (A2) or (A3) | Part by weight | - | - | - | - | 20.0 | 300 | - | - | - | - | - | - |
| | Melt-knead-ed resin composition (B1) | (Ba)kind | - | Ba-1 | Ba-1 | Ba-1 | Ba-1 | Ba-1 | Ba-1 | Ba-1 | Ba-1 | Ba-1 | Ba-1 | Ba-1 | Ba-1 |
| | | (Bb)kind | | Bb-1 | Bb-1 | Bb-1 | Bb-1 | Bb-1 | Bb-1 | Bb-1 | Bb-1 | Bb-1 | Bb-1 | Bb-1 | Bb-1 |
| | | Content | Part by weight | 79.8 | 70.0 | 70.0 | 82.0 | 70.0 | 82.0 | 76.0 | 79.8 | 70.0 | 79.0 | 76.0 | 70.0 |

(continued)

| | | | | Example 49 | Example 50 | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|---|---|
| | Rosin resin (C) | Kind | - | C-2 | C-2 | C-2 | C-2 | C-2 | C-2 | C-2 | C-2 | C-2 | C-2 | C-4 | C-4 |
| | | Acid value or hydroxyl value | mgKOH/g | 150.0 | 150.0 | 150.0 | 150.0 | 150.0 | 150.0 | 150.0 | 150.0 | 150.0 | 150.0 | 230.0 | 230.0 |
| | | Thermal loss at 270°C of rosin resin (C) | % | A | A | A | A | A | A | A | A | A | A | B | B |
| | | Content | Part by weight | 0.2 | 10.0 | 5.0 | 3.0 | 5.0 | 3.0 | 4.0 | 0.2 | 10.0 | 1.0 | 4.0 | 5.0 |
| | | Content of rosin resin (C) relative to Reinforcing fibers (A) | % | 1.0 | 50.0 | 20.0 | 20.0 | 20.0 | 20.0 | 20.0 | 1.0 | 50.0 | 5.0 | 20.0 | 20.0 |
| Molded article | Average fiber length | $Lw_{a1}$ | mm | 1.0 | 1.4 | 1.1 | 1.2 | 1.1 | 1.3 | 0.1 | 2.5 | 4.0 | 7.0 | 1.0 | 1.1 |
| | | $Lw_{a2}$ | mm | - | - | 5.0 | 5.7 | - | - | - | - | - | - | - | 4.5 |
| | | $Lw_{a1}$ | mm | - | - | - | - | 2.2 | 2.1 | - | - | - | - | - | - |
| | Morphology | Particle diameter of (Bb) is 10 to 1.000 nm. | - | O | O | O | O | O | O | O | O | O | O | O | O |
| | | Particle diameter of (Bc) is 1 to 100 nm. | - | O | O | O | O | O | O | O | O | O | O | O | O |
| | | Area ratio of (Bc) in (Bb) is 20% or more. | - | O | O | O | O | O | O | O | O | O | O | O | O |

| | | | | Example 49 | Example 50 | Example 51 | Example 52 | Example 53 | Example 54 | Example 55 | Example 56 | Example 57 | Example 58 | Example 59 | Example 60 |
|---|---|---|---|---|---|---|---|---|---|---|---|---|---|---|---|
| Evaluation result | Mechanical property | Charpy impact strength | kJ/m² | 12.0 | 25.0 | 40.5 | 30.0 | 33.0 | 22.5 | 15.0 | 27.0 | 31.0 | 45.0 | 20.0 | 30.0 |
| | | Tensile strength | MPa | 190.0 | 210.0 | 180.0 | 180.0 | 210.0 | 195.0 | 150.0 | 215.0 | 220.0 | 230.0 | 200.0 | 170.0 |
| | | Flexural modulus | GPa | 12.0 | 12.0 | 12.0 | 4.0 | 13.0 | 5.0 | 11.0 | 12.0 | 120 | 14.0 | 12.0 | 12.0 |
| | Appearance quality | Dispersibility | - | B | A | A | A | A | A | A | A | A | A | B | B |
| | | Blackness | mm | B | A | A | A | A | A | A | A | A | A | B | B |

EP 4 414 415 A1

[Table 6]

| | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|---|---|
| Reinforcing fiber (A) | | Content | Part by weight | 20.0 | 20.0 | 20.0 | 20.0 | 20.0 | 1.0 | 60.0 | 20.0 | 20.0 | 20.0 | 20.0 |
| | | Fiber kind | - | CF | CF | CF | CF | CF | CF | CF | CF | CF | CF | CF |
| | | Content of (A1) relative to the total of 100 parts by weight of (A1) and (A2) or (A3) | Part by weight | 100.0 | 100.0 | 100.0 | 100.0 | 100.0 | 100.0 | 100.0 | 100.0 | 100.0 | 1000 | 100.0 |
| | | Content of (A2) relative to the total of 100 parts by weight of (A1) and (A2) or (A3) | Part by weight | - | - | - | - | - | - | - | - | - | - | - |
| | | Content of (A3) relative to the total of 100 parts by weight of (A1) and (A2) or (A3) | Part by weight | - | - | - | - | - | - | - | - | - | - | - |

(continued)

| | | Unit | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|---|
| Raw material | Meh-kneaded resin composition (Bi) | (Ba)kind | - | Ba-1 | Ba-1 | Ba-1 | Ba-1 | Ba-1 | Ba-1 | Ba-1 | Ba-1 | Ba-1 | Ba-1 | Ba-1 |
| | | (Bb)kind | - | Bb-1 | Bb-1 | - | Bb-1 | Bb-1 | Bb-1 | Bb-1 | Bb-1 | Bb-1 | Bb-1 | Bb-l |
| | | Content | Part by weight | 76.0 | 76.0 | 76.0 | 76.0 | 76.0 | 98.8 | 29.0 | 79.9 | 40.0 | 76.0 | 76.0 |
| | Rosin resin (C) | Kind | | - | - | - | C-3 | C-6 | C-2 | C-2 | C-2 | C-2 | C-2 | C-2 |
| | | Acid value or hydroxyl value | | - | - | - | 50.0 | 80.0 | 150.0 | 150.0 | 150.0 | 150.0 | 150.0 | |
| | | Thermal loss at 270°C of rosin resin (C) | % | - | - | - | A | A | A | A | A | A | A | A |
| | | Content | Part by weight | - | - | - | 4.0 | 4.0 | 0.2 | 11.0 | 0.1 | 40.0 | 4.0 | 4.0 |
| | | Content of rosin resin (C) relative to Reinforcing fibers (A) | % | - | - | - | 20.0 | 20.0 | 20.0 | 18.3 | 0.5 | 200.0 | 20.0 | 20.0 |

(continued)

| | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|
| Resin (D) | Kind | - | D-1 | 0.2 | D-3 | - | - | - | - | - | - | - | - |
| | Acid value or hydroxyl value | mg-KOH/g | 160.0 | 0.0 | 1.0 | - | - | - | - | - | - | - | - |
| | Thermal loss at 270°C of resin (D) | % | B | C | C | - | - | - | - | - | - | - | - |
| | Content | Part by weight | 4.0 | 4.0 | 4.0 | - | - | - | - | - | - | - | - |
| | Content of resin (D) relative to Reinforcing fibers (A) | % | 20.0 | 20.0 | 20.0 | - | - | - | - | - | - | - | - |

48

(continued)

| | | | | Comparative Example 1 | Comparative Example 2 | Comparative Example 3 | Comparative Example 4 | Comparative Example 5 | Comparative Example 6 | Comparative Example 7 | Comparative Example 8 | Comparative Example 9 | Comparative Example 10 | Comparative Example 11 |
|---|---|---|---|---|---|---|---|---|---|---|---|---|---|---|
| Molded article | Average fiber length | $Lw_{a1}$ | mm | 1.0 | 0.9 | 0.8 | 0.8 | 0.8 | 1.5 | 0.1 | 0.6 | 1.3 | 0.05 | 10.0 |
| | | $Lw_{a2}$ | mm | - | - | - | - | - | - | - | - | - | - | - |
| | | $Lw_{a1}$ | mm | - | - | - | - | - | - | - | - | - | - | - |
| | Morphology | Particle diameter of (Bb) is 10 to 1,000 nm. | - | O | O | O | O | O | O | O | O | O | O | O |
| | | Particle diameter of (Bc) is 1 to 100 nm. | - | O | O | O | O | O | O | O | O | O | O | O |
| | | Area ratio of (Bc) in (Bb) is 20% or more. | - | O | O | O | O | O | O | O | O | O | O | O |
| Evaluation result | Mechanical property | Charpy impact strength | kJ/m$^2$ | 10.0 | 9.0 | 9.0 | 9.0 | 9.0 | 60 | 20.0 | 8.0 | 9.0 | 7.0 | 9.0 |
| | | Tensile strength | MPa | 150.0 | 140.0 | 140.0 | 150.0 | 155.0 | 50.0 | 210.0 | 145.0 | 160.0 | 140.0 | 150.0 |
| | | Flexural modulus | GPa | 9.0 | 9.0 | 9.0 | 9.0 | 9.0 | 2.0 | 31.0 | 40 | 90 | 7.0 | 8.0 |
| | Appearance quality | Dispersibility | - | C | C | C | C | C | A | C | A | B | A | C |
| | | Blackness | - | C | C | C | C | C | C | A | A | B | A | C |

EP 4 414 415 A1

Industrial Applicability

The fiber-reinforced thermoplastic resin composition of the present invention has excellent tensile strength, impact strength, and appearance quality, so it is suitably used for applications such as electrical and electronic equipment, OA equipment, home appliances, housings, sports parts, and automobile parts.

Explanation of symbols

1: reinforcing fibers (A)
2: thermoplastic resin (B)
3: rosin resin (C)
4: fiber bundle

**Claims**

1. A fiber-reinforced thermoplastic resin composition comprising 5 to 50 parts by weight of reinforcing fibers (A) containing at least carbon fibers, 20 to 94.5 parts by weight of a thermoplastic resin (B), and 0.5 to 30 parts by weight of a rosin resin (C), wherein the rosin resin (C) has an acid value and/or hydroxyl value of 100 mgKOH/g or more.

2. The fiber-reinforced thermoplastic resin composition according to claim 1, wherein the rosin resin (C) is contained at 1 to 100 parts by weight relative to 100 parts by weight of the reinforcing fibers (A).

3. The fiber-reinforced thermoplastic resin composition according to claim 1 or 2, wherein the rosin resin (C) is modified.

4. The fiber-reinforced thermoplastic resin composition according to any one of claims 1 to 3, wherein the rosin resin (C) contains at least one selected from the group consisting of hydrogenated rosin, polymerized rosin, acid modified rosin, rosin ester and rosin polyol.

5. The fiber-reinforced thermoplastic resin composition according to any one of claims 1 to 4, wherein a thermal loss at 270°C of the rosin resin (C) is less than 5%.

6. The fiber-reinforced thermoplastic resin composition according to any one of claims 1 to 5, wherein the reinforcing fibers (A) further contain at least one selected from the group consisting of organic fibers and glass fibers.

7. The fiber-reinforced thermoplastic resin composition according to claim 6, wherein the organic fiber is at least one selected from the group consisting of polyamide fiber, polyester fiber, liquid crystal polyester fiber, polyarylene sulfide fiber and fluoro resin fiber.

8. The fiber-reinforced thermoplastic resin composition according to any one of claims 1 to 7, wherein a weight average fiber length (Lw) of the reinforcing fibers (A) is in a range of 0.1 to 7.0 mm.

9. The fiber-reinforced thermoplastic resin composition according to any one of claims 1 to 8, wherein the thermoplastic resin (B) contains at least one selected from the group consisting of polyamide resin, polyolefin resin, polycarbonate resin and polyphenylene sulfide resin.

10. The fiber-reinforced thermoplastic resin composition according to any one of claims 1 to 9, wherein the thermoplastic resin (B) comprises at least two thermoplastic resins (Ba) and (Bb) different from each other.

11. The fiber-reinforced thermoplastic resin composition according to claim 10, wherein the thermoplastic resin (Bb) comprises a thermoplastic resin having a reactive functional group, 20 to 94.5 parts by weight of a melt kneaded resin composition (B 1) obtained by melt-kneading the thermoplastic resin (Ba) and the thermoplastic resin (Bb) is contained, the melt kneaded resin composition (B 1) contains the thermoplastic resin (Ba) and a compound (Be) produced by a reaction of the resin (Bb) having a reactive functional group, the resin (Ba) and the resin (Bb), and in the melt kneaded resin composition (B1), the resin (Bb) having a reactive functional group is dispersed in the thermoplastic resin (Ba) in a particle-like form with a number average particle diameter of 10 to 1,000 nm.

12. The fiber-reinforced thermoplastic resin composition according to claim 11, wherein the thermoplastic resin (Ba) contained in the melt kneaded resin composition (B 1) forms a continuous phase, the resin (Bb) having a reactive functional group forms a dispersed phase, and fine particles composed of the compound (Bc) having a particle diameter of 1 to 100 nm are contained in the dispersed phase.

13. The fiber-reinforced thermoplastic resin composition according to claim 12, wherein an area ratio of the fine particles composed of the compound (Be) in the dispersed phase formed by the resin (Bb) is 20% or more.

14. The fiber-reinforced thermoplastic resin composition according to any one of claims 11 to 13, wherein the reactive functional group of the resin (Bb) is at least one selected from the group consisting of an amino group, a carboxyl group, a metal salt of a carboxyl group, an epoxy group, an acid anhydride group, and an oxazoline group.

15. The fiber-reinforced thermoplastic resin composition according to any one of claims 10 to 14, wherein the thermoplastic resin (Ba) is a polyamide resin and the resin (Bb) is a polyolefin resin.

# FIG. 1

# FIG. 2

# FIG. 3

# FIG. 4

## INTERNATIONAL SEARCH REPORT

International application No.

**PCT/JP2022/034992**

| A. | CLASSIFICATION OF SUBJECT MATTER |
|---|---|

*C08J 5/10*(2006.01)i; *C08K 3/04*(2006.01)i; *C08K 3/40*(2006.01)i; *C08K 7/02*(2006.01)i; *C08L 93/04*(2006.01)i;
*C08L 101/00*(2006.01)i; *C08L 101/02*(2006.01)i; *C08L 101/06*(2006.01)i; *C08L 101/08*(2006.01)i
FI:   C08J5/10 CFG; C08L101/00; C08L93/04; C08K7/02; C08L101/02; C08L101/08; C08L101/06; C08K3/40; C08K3/04

According to International Patent Classification (IPC) or to both national classification and IPC

| B. | FIELDS SEARCHED |
|---|---|

Minimum documentation searched (classification system followed by classification symbols)

   C08J5/10; C08K3/04; C08K3/40; C08K7/02; C08L93/04; C08L101/00; C08L101/02; C08L101/06; C08L101/08

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021/106746 A1 (ARAKAWA CHEMICAL INDUSTRIES, LTD.) 03 June 2021 (2021-06-03) | 1-4, 6-9 |
| | claims 2, 5, 6, paragraphs [0029]-[0097], [0173]-[0183], [0192]-[0203], [0250], [0260], [0269], [0295], [0304], [0306], [0356], [0359], [0361]-[0362], examples 3-3, 3-5, 3-6, tables 1, 4 | |
| Y | claims 2, 5, 6, paragraphs [0029]-[0097], [0173]-[0183], [0192]-[0203], [0250], [0260], [0269], [0295], [0304], [0306], [0356], [0359], [0361]-[0362], examples 3-3, 3-5, 3-6, tables 1, 4 | 10-15 |
| Y | WO 2010/107022 A1 (TORAY INDUSTRIES, INC.) 23 September 2010 (2010-09-23) | 10-15 |
| | claims 1, 3-5, 7-8, paragraphs [0012], [0173]-[0176], tables 1-11 | |
| Y | JP 2010-195853 A (TORAY INDUSTRIES, INC.) 09 September 2010 (2010-09-09) | 10-15 |
| | claims 1, 4, 6-7, paragraphs [0010], [0103]-[0106], tables 1-6 | |
| A | WO 2019/208810 A1 (BRIDGESTONE CORP.) 31 October 2019 (2019-10-31) | 10-15 |
| | entire text | |

☑ Further documents are listed in the continuation of Box C.       ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 December 2022** | **20 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT

| | International application No. |
|---|---|
| | **PCT/JP2022/034992** |

### C.    DOCUMENTS CONSIDERED TO BE RELEVANT

| Category* | Citation of document, with indication, where appropriate, of the relevant passages | Relevant to claim No. |
|---|---|---|
| A | JP 2005-187809 A (TORAY INDUSTRIES, INC.) 14 July 2005 (2005-07-14)<br>entire text | 10-15 |
| A | WO 2014/098103 A1 (TORAY INDUSTRIES, INC.) 26 June 2014 (2014-06-26)<br>entire text | 1-15 |
| A | JP 2017-39901 A (UNITIKA LTD.) 23 February 2017 (2017-02-23)<br>entire text | 1-15 |
| A | JP 2014-93427 A (UNITIKA LTD.) 19 May 2014 (2014-05-19)<br>entire text | 1-15 |
| A | JP 2016-74866 A (FURUTA, Motonobu) 12 May 2016 (2016-05-12)<br>entire text | 1-15 |
| A | JP 2016-108521 A (FURUTA, Motonobu) 20 June 2016 (2016-06-20)<br>entire text | 1-15 |

Form PCT/ISA/210 (second sheet) (January 2015)

**INTERNATIONAL SEARCH REPORT**
Information on patent family members

International application No.

**PCT/JP2022/034992**

| Patent document cited in search report | | | Publication date (day/month/year) | Patent family member(s) | | | Publication date (day/month/year) |
|---|---|---|---|---|---|---|---|
| WO | 2021/106746 | A1 | 03 June 2021 | TW | 202130716 | A | |
| WO | 2010/107022 | A1 | 23 September 2010 | US | 2012/0028047 | A1 | |
| | | | | claims 1, 3-5, 7-8, paragraphs [0020], [0024], [0186]-[0191], tables 1-11 | | | |
| | | | | EP | 2410021 | A1 | |
| | | | | CN | 102300936 | A | |
| | | | | TW | 201041944 | A | |
| | | | | KR | 10-2011-0130385 | A | |
| JP | 2010-195853 | A | 09 September 2010 | (Family: none) | | | |
| WO | 2019/208810 | A1 | 31 October 2019 | (Family: none) | | | |
| JP | 2005-187809 | A | 14 July 2005 | (Family: none) | | | |
| WO | 2014/098103 | A1 | 26 June 2014 | US | 2015/0291789 | A1 | |
| | | | | entire text | | | |
| | | | | US | 2017/0029580 | A1 | |
| | | | | US | 2017/0029581 | A1 | |
| | | | | EP | 2937377 | A1 | |
| | | | | EP | 3473665 | A1 | |
| | | | | CN | 104870531 | A | |
| | | | | KR | 10-2015-0099710 | A | |
| | | | | TW | 201430019 | A | |
| | | | | CN | 106867002 | A | |
| JP | 2017-39901 | A | 23 February 2017 | (Family: none) | | | |
| JP | 2014-93427 | A | 19 May 2014 | (Family: none) | | | |
| JP | 2016-74866 | A | 12 May 2016 | (Family: none) | | | |
| JP | 2016-108521 | A | 20 June 2016 | (Family: none) | | | |

Form PCT/ISA/210 (patent family annex) (January 2015)

**REFERENCES CITED IN THE DESCRIPTION**

**Patent documents cited in the description**

- JP 10138379 A
- JP 2011162905 A
- JP 2016074866 A
- WO 2010107022 A
- WO 2014098103 A

- JP 2002129027 A
- JP 453368 B
- JP 52012240 B
- JP 61007332 A
- JP 5155972 A